(19) Europäisches Patentamt / European Patent Office / Office européen des brevets

(11) **EP 2 425 592 B1**

(12) **EUROPEAN PATENT SPECIFICATION**

(45) Date of publication and mention of the grant of the patent:
**18.04.2018 Bulletin 2018/16**

(21) Application number: **10719156.1**

(22) Date of filing: **27.04.2010**

(51) Int Cl.:
*H04L 12/801* (2013.01)   *H04L 29/08* (2006.01)
*H04L 29/06* (2006.01)   *H04L 12/825* (2013.01)
*H04L 12/911* (2013.01)

(86) International application number:
**PCT/US2010/032563**

(87) International publication number:
**WO 2010/129275 (11.11.2010 Gazette 2010/45)**

(54) **ADAPTIVE RATE CONTROL BASED ON OVERLOAD SIGNALS**

ADAPTIVE RATENSTEUERUNG AUF BASIS VON ÜBERLASTSIGNALEN

CONTRÔLE DE DÉBIT ADAPTATIVE BASÉ SUR DES SIGNAUX DE SURCHARGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.04.2009 US 430708**
**29.01.2010 US 696523**

(43) Date of publication of application:
**07.03.2012 Bulletin 2012/10**

(60) Divisional application:
**11190548.5 / 2 456 142**

(73) Proprietor: **Sonus Networks, Inc.**
**Westford, MA 01886-3141 (US)**

(72) Inventors:
• **ABDELAL, Ahmed**
  **North Andover**
  **MD 01845 (US)**
• **MATRAGI, Wassim**
  **North Andover**
  **MA 01845 (US)**
• **CHAN, Nui**
  **Belle Mead**
  **NJ 08502 (US)**
• **BHARRAT, Shaun, Jaikarran**
  **Manalapan**
  **NJ 07726 (US)**

(74) Representative: **Greene, Simon Kenneth**
**Elkington and Fife LLP**
**Prospect House**
**8 Pembroke Road**
**Sevenoaks, Kent TN13 1XR (GB)**

(56) References cited:
**US-A1- 2007 088 826     US-B1- 6 377 989**

**Description**

FIELD OF THE INVENTION

The invention relates generally to methods and apparatuses, including computer program products, for detecting and limiting focused server overload in networks.

BACKGROUND OF THE INVENTION

Efficient communication systems are becoming increasingly important as the demand for communication services increases. Communication services can range from the processing of telephone call setup requests, to the routing of Internet Protocol (IP) data packets over networks, to the processing of Hypertext Transfer Protocol (HTTP) requests for websites and/or content. Communication systems generally include servers to process requests for services from clients. Servers can range from telecommunication switches for processing of telephone call setup requests, to network routers for routing of IP data packets, to web and/or content servers for processing HTTP requests, and the like.

Occasionally, service requests may arrive at a server at a rate faster than the server can process the requests. The rate of the server processing the requests can change due to one or more of the following: variations in processing demands of different requests, background or administrative activities that run on the server, and/or partial or full failure of software or hardware elements in the server. Communication servers typically implement overload controls to maintain the throughput of service request processing at the server at acceptable levels during these periods of high demand.

Overload occurs when a server has insufficient resources (e.g., CPU processing capacity, memory, network bandwidth, input/output, disk resources, etc.) to successfully process all the requests its receives. Some types of servers can experience prolonged overload due to high rates of incoming service requests and/or partial network failures. Overloads can be caused by the following (either individually or in combination): (1) media-stimulated mass-calling events (e.g., tele-votes, charity appeals, competitions, marketing campaigns, and/or the like); (2) emergencies; (3) network equipment failures; (4) auto-scheduled calling (e.g., snow-day cancellation alerts); and/or (5) Denial of Service (DoS) attacks. Focused overload is a special case of a network overload where the overload is focused on a subset of the network. This subset can range from network destination (e.g., a telephone number or an IP address) to a group of network servers.

In the absence of overload control, such overloads can threaten the stability of a communication network, and can cause a severe reduction in successful service completions. Ultimately, server(s) can fail to provide service(s) due to lost requests resulting in the unavailability of services to clients. Often, overload problems can compound themselves, which can cause even more load on a server(s). Furthermore, during overload, the overall capacity of a server(s) can go down, since much of their resources are spent rejecting and/or treating load that they cannot actually process. Under severe overload, the throughput can drop down to a small fraction of the original processing capacity. This is often called congestion collapse. In addition, overload tends to cause service requests to be delayed and/or lost, which can trigger high rates of client abandons and/or reattempts.

Servers can be equipped with some form of adaptive overload detection and control in order to protect against high and unpredictable levels of demand and to keep response times low enough during processing overload to preclude clients from abandoning their service requests prematurely. Some servers implement internal overload control mechanisms, where an overloaded server can reject new requests to maximize successful completion of admitted sessions. Other servers can implement external overload control mechanisms, where servers can control the rate (e.g., set a restriction on the request rate) at which clients can send additional requests for service by communicating control messages to one or more clients.

However, server-implemented internal and external mechanisms as described above (also known as "receiver-based" control mechanisms) can only protect servers against overload to a limited extent, and have difficulties preventing congestion collapse. In particular, receiver-based control mechanisms require the server to maintain and update the restrictions for clients based on the server's internal overload level and then distribute these restrictions via an overload feedback mechanism to clients. Restrictions can include, for example, explicit rate messages, overload window size messages (that limit the number of messages that can be in transit towards the server without being confirmed), and/or loss percentage messages (by which clients should reduce the number of requests they would normally forward to a server). All receiver-based schemes require monitoring the activity of clients to update its distribution list, which can include adding a new client to the server's distribution list when the new client appears, and removing an existing client when that client stops transmitting for a suitable amount of time. Each of these requirements add processing burden to the already overloaded server.

In addition, in explicit rate and overload window schemes, an overloaded server continuously evaluates the amount of load it receives from each upstream neighbor and accordingly assigns a suitable rate cap or overload window size, which should timely be sent back to the transmitting clients to update their restriction levels. Receiver-based schemes that feed back the loss percentage may not impose similar overhead on an overloaded server, because the same loss percentage can be sent to all the upstream neighbors thus dropping the requirement to track the request rate it receives from each client. However, loss percentage schemes may not provide efficient control, because as upstream clients apply the loss percentage on the request rate towards the overloaded server, which can fluctuates quickly, the request rate towards the overloaded server can also fluctuate quickly. These fluctuations require the overloaded server to be able to quickly adapt the throttle percentage to its current load.

Another drawback of receiver-based controls is that they may require changes to the particular protocol stack at the clients and the server(s) in order to implement an overload feedback mechanism. For example, one technique proposed to detect focused overload is load filtering, where network operators create filters that indicate that calls to specific destinations or from specific sources should be rate limited or randomly dropped. However, this mechanism requires that the SIP stack of a server includes a new overload event package. Changes to the protocol stack can slow down the adoption of such controls. Further, these are static mechanisms configured based on a pre-knowledge of the overload events (e.g., televoting), and will fail to react to sudden overloads (e.g., those associated with emergencies or network failures).

Another technique proposed to detect focused overload is to monitor the call rejection rate to a specific destination (e.g, called number) and if the rate exceeds a certain threshold, reporting this event as a probable focused overload to this destination. The server starts to throttle the calls towards this destination and at the same time propagates this overload event to the upstream servers. However, these detection algorithms are implemented using token buckets, which require massive amounts of storage. Additionally, these mechanisms depend only on explicit call rejection to detect overload, and require a team of distributed monitors across the network to detect the focused overload events.

US 6,377,989 teaches a method for adapting to a sudden change in network delay time in a remote video signal distributing system.

SUMMARY OF THE INVENTION

One approach to controlling server resources during overload is to limit server overload via client control. The invention, in one aspect, features a computerized method for limiting server overload in a network according to claim 1.

In another embodiment, the predetermined criteria is a threshold, and determining includes determining the value is greater than the threshold. The threshold can be calculated using hysteresis. One or more sources that are responsible for causing the overload episode can be identified, wherein each source initiated a transmission to the downstream server that caused the downstream server to transmit a feedback message including the statistic.

In another embodiment, one or more control parameters for performing a control action based on the value are determined, wherein the control action reduces a transmission rate of data from one or more sources responsible for causing the overload episode to the downstream server. The one or more control parameters can be transmitted to a server node between a source responsible for causing the overload episode and the downstream server. The control action can be performed at the server node on data transmitted from the source to the downstream server by reducing a transmission rate of data transmitted from the source to the downstream server, wherein the reduction is performed based on the one or more control parameters. The transmission rate can be a call attempt rate of the one or more sources responsible for causing the overload episode to the downstream server.

In another aspect, there is a computerized method for limiting server overload via client control. The method includes transmitting a first set of a plurality of requests for services to a server at a first transmission rate during a first period of time, and limiting the first transmission rate to be less than or equal to a first transmission limit rate during the first period of time. The method also includes determining an overload value based on whether at least two or more requests of the first set of requests for service satisfy an overload criterion, and storing the overload value in a computer memory module. The method also includes determining a second transmission limit rate based on the overload value and the first transmission limit rate. The method also includes transmitting a second set of a plurality of requests for services to the server at a second transmission rate during a second period of time after the first period of time, and limiting the second transmission rate to be less than or equal to the second transmission limit rate during the second period of time.

In another aspect, there is a system for limiting server overload via client control according to claim 14.

In another aspect, there is a computer program tangibly embodied in a machine-readable storage device according to claim 15.

In other examples, any of the aspects above can include one or more of the following features. It can be determined whether the overload value is less than or greater than a target overload value. If the overload value is greater than the target overload value, determining the second transmission limit rate can include reducing the first transmission limit rate by an amount proportional to the difference between the overload value and the target overload value. If the overload value is greater than the target overload value, determining the second transmission limit rate can include reducing the first transmission limit rate by an amount proportional to the overload value or to the deviation of the overload value from the target overload value.

In some embodiments, the overload value can represent a rate of requests satisfying the overload criterion. If the overload value is less than the target overload value, determining the second transmission limit rate can include increasing the first transmission limit rate by a rate step. The rate step can be fixed. The rate step can be based on the first transmission limit rate. The rate step can be bounded by a maximum rate step and a minimum rate step. A first layer entity can determine the overload value and a second layer entity can limit the first transmission rate. The first layer entity can be different from the second layer entity. The first layer entity can include a transport layer entity and the second layer entity can include an application layer entity.

The overload criterion can be an explicit overload criterion. The explicit overload criterion can apply to a single request only. The explicit overload criterion can specify a non-throttling client response. In yet other embodiments, a first request for service from the first set can satisfy the explicit overload criterion if a first rejection message associated with the first request is received.

The overload criterion can be an implicit overload criterion. A first request for service from the first set can satisfy the implicit overload criterion if the elapsed time since the first request was transmitted is greater than a delay threshold. The implicit overload criterion can be satisfied if a fraction of outstanding requests for service in a time interval is equal to or greater than a fractional threshold value. The implicit overload criterion can be based on one or more response messages from the server that are not associated with peer congestion. The implicit overload criterion can be satisfied if a fraction of the one or more responses is equal to or greater than a fractional threshold value. The implicit overload criterion can be based on a change in a fraction of the one or more responses that are equal to or greater than a fractional threshold value.

The delay threshold can be static. The delay threshold can be based on an average response time to one or more prior requests for services transmitted to the server. The delay threshold can be based on a percentile response time to one or more prior requests for services transmitted to the server. A first request for service from the first set can satisfy the overload criterion based on whether a second response to a second request for service from the first set is received before a first response to the first request is received, wherein the second request was transmitted to the server after the first request.

In some embodiments, determining the overload value can include averaging and/or filtering the number of requests from the first set that satisfy the overload criterion. Determining the overload value can be further based on one or more prior overload values associated with one or more periods of time prior to the first period of time. The first period of time can be separated from the second period of time by a blind interval period of time. The blind interval period of time can be a fixed interval of time and/or can be based on an average response time to one or more prior requests for services transmitted to the server.

In some embodiments, transmitting the first set of requests can include prioritizing transmission of the one or more requests based on request type. Request type of the one or more requests can include: high priority, regular, or any combination thereof. The first and second set of requests can be of the same classification and/or type. The first set of requests can include at least requests of a first and second classification and/or type. The second set of requests can include only requests of the first classification and/or type. The first classification and/or type can include automatic retransmissions of one or more service requests.

In other examples, any of the features above relating to a method can be performed by a system, and/or a controller of the system, configured to or having means for performing the method. In addition, any of the features above relating to a method can be performed by a computer program product including instructions being operable to cause a data processing apparatus to perform the method.

Any of the above implementations can realize one or more of the following advantages. By using a space-efficient and computationally-efficient data structure (e.g., a bloom filter) to store communication protocol statistics, detection of overload episodes (e.g., focused overload episodes) can be done quickly and efficiently. The implementations can be designed to aggregate data structures stored across multiple network elements (e.g., sources, server nodes) to gather network-wide statistics for downstream servers or network elements. Control parameters can be calculated based on the data structures and distributed to the appropriate action locations (e.g., clients, server nodes) to reduce the number of messages causing the overload episode before they reach the downstream server to prevent the unnecessary use of network bandwidth and to reduce the processing load on the downstream server. By distributing overload control to clients, the offered load to servers can be reduced to a level that can maximize server throughput. The implementations can be designed to have clients suppress some service requests before they reach an overloaded server, which can result in protecting the overloaded system from more extreme overloads and/or can enable the server to operate at near optimum load for the entire duration of an overload event.

Other implementations can bound the response times, which can advantageously help control stability by reducing feedback delay of service requests. Furthermore, client-based control can advantageously reduce the burden on servers that update and/or distribute restriction level control messages to clients by shifting the processing burden to clients. Additional implementations can be designed that advantageously do not require changes in the servicing protocol (e.g., SIP). In addition, client-implemented overload control can be completely implemented on the client system, which advantageously lessens the processing burden on overloaded servers. Because the performance of servers can be critical to the operation of a service-oriented infrastructure, client-implemented overload control techniques advantageously can reduce the latency of media applications (e.g., initiating a phone call) and can maintain a maximum, or substantially maximum, throughput even when a server is subjected to overload.

Client-implemented overload control techniques, including methods and apparatuses, can satisfy, for example, one or more of the following requirements: (1) automatically maximize the throughput at an overloaded server; (2) achieve high throughput throughout the duration of an overload event; (3) during overload, a high proportion of response times are low enough so as not to cause clients to prematurely abandon service requests; and/or (4) react quickly to changes in workloads. Advantageously, the overload control techniques do not depend on pre-knowledge about the overload events. Further, service identifiers (e.g., unique codes) can classify a particular service request into one or more classes of services (e.g., each class of service has a different level of throughput).

The details of one or more examples are set forth in the accompanying drawings and the description below. Further features, aspects, and advantages of the invention will become apparent from the description, the drawings, and the claims. The drawings are not necessarily to scale, emphasis instead generally being placed upon illustrating the principles of the invention.

## BRIEF DESCRIPTION OF THE DRAWINGS

The advantages of the invention described above, together with further advantages, will be better understood by referring to the following description taken in conjunction with the accompanying drawings. The drawings are not necessarily to scale, emphasis instead generally being placed upon illustrating the principles of the invention.

FIG. 1 is a block diagram showing an exemplary network with devices relating to servers processing service requests from clients.

FIG. 2 is a block diagram showing the components of a client.

FIG. 3 is a block diagram showing the components of a model control loop.

FIG. 4 is a diagram showing windowed time intervals.

FIGS. 5-6 are flowcharts depicting external control of server resources.

FIG. 7 is a ladder diagram illustrating a simulated model SIP message flow.

FIG. 8 is two-dimensional plot illustrating throughput versus offered load for different overload control schemes.

FIG. 9 is a schematic illustration of a network for detecting and limiting focused server overload, according to an illustrative embodiment of the invention.

FIG. 10 is a schematic illustration of a bloom filter for storing and detecting focused server overload in a network, according to an illustrative embodiment of the invention.

FIG. 11 is a flowchart illustrating a method for detecting focused server overload in a network, according to an illustrative embodiment of the invention.

FIG. 12A is a schematic illustration of a chart for a counting bloom filter for detecting focused server overload in a network, according to an illustrative embodiment of the invention.

FIG. 12B is a schematic illustration of a chart for an aggregate counting bloom filter for detecting focused server overload in a network, according to an illustrative embodiment of the invention.

FIG. 12C is a schematic illustration of a chart for an aggregate called number distribution for detecting focused server overload in a network, according to an illustrative embodiment of the invention.

FIG. 13 is a flowchart illustrating a method for determining the one or more control parameters for limiting focused server overload in a network, according to an illustrative embodiment of the invention.

FIG. 14A is a flowchart illustrating a method for determining an action level for limiting focused server overload in a network, according to an illustrative embodiment of the invention.

FIG. 14B is a flowchart illustrating a method for determining an action level for limiting focused server overload in a network, according to an illustrative embodiment of the invention.

FIG. 15 is a flowchart illustrating a method for limiting focused server overload in a network, according to an illustrative embodiment of the invention.

## DESCRIPTION OF THE INVENTION

I. Network Overview

The systems and methods described herein provide for storing communication protocol statistics (e.g., received via feedback messages from a downstream server) in a computer using a space-efficient and computationally-efficient data structure (e.g., a bloom filter, a counting bloom filter, or a multi-level threshold based bloom filter(MLBF)). It should be understood that the term bloom filter is used in this specification generally, and can refer to any type of bloom filter, such as a traditional bloom filter, a counting bloom filter, and/or a MLBF. Servers on the network determine whether an overload episode exists for a downstream server or destination (e.g., whether a focused overload exists for a downstream server) using the data structure. If an overload exists, control parameters are calculated using a computer that define a control action that is distributed to one or more network components to control the overload episode (e.g., by reducing the transmission rate from sources to the overloaded downstream server or destination).

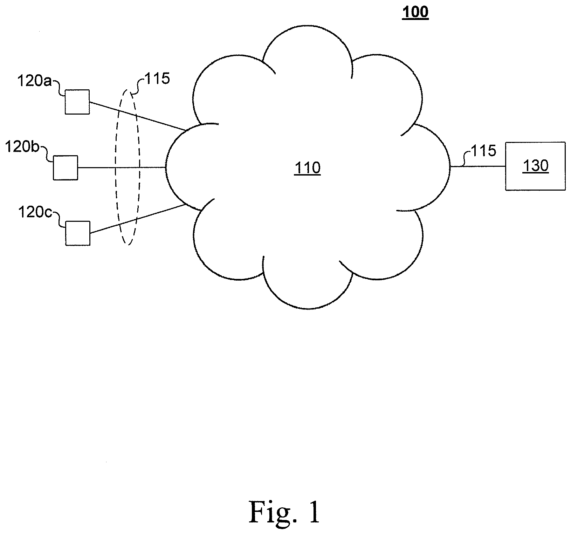

FIG. 1 is a block diagram showing an exemplary network **100** with devices relating to servers processing service requests from clients. Network **100** includes transmission medium **110**, one or more clients **120a, 120b,** and/or **120c,** generally **120,** and at least one server **130** (e.g., a downstream server). Transmission medium **110** (e.g., a communications network) is responsible for the transfer of information, including requests for services, between one or more clients **120** and/or server **130**. As described in more detail below, the clients 120 are configured according to some of the inventive techniques described herein. There can be one or more intermediate server nodes (not shown) between the one or more clients **120** and server **130**, which is any node that is not a client **120** or a server **130** (or downstream server 130).

Transmission medium **110** can be coupled to clients **120** by connections **115**. Clients **120** can be any devices capable of requesting one or more services from server **130**. Clients **120** can include user devices such as computers, telephones, IP phones, mobile devices (e.g., cellular phones, personal digital assistant (PDA) devices, laptop computers, and/or the like), and/or other communication devices. In some embodiments, such as in telecommunication networks, the clients **120** are media gateways where, for example, session requests from calling sources (not shown) enter the network **110**. In some embodiments, one or more clients **120** can also perform one or more server functions, and therefore can be considered as server(s) different from server **130**. For example, in telecommunication networks, a telecommunication switch, such as an end office or a tandem switch, can act as a server and/or as a client to any neighboring telecommunication switch, which can, respectively, act as a client requesting a service such as a call setup and/or as a server. In another example, IP routers or network switches can act as servers and/or clients to any neighboring or remote IP routers or network switches, which can respectively act as clients and/or servers. As a client, the neighboring or remote IP device can request transmission of IP packets and/or send gateway control requests. In yet another embodiment, clients **120** and server **130** can be located in the same computing device, either physically and/or logically. For example, a computer can run multiple tasks, programs, and/or processes, in which case a single processing unit in server **130** is responsible for processing services for each of the tasks, programs, and/or processes which act as clients **120**. In this example, transmission medium **110** can include an internal bus if clients **120** are separate from the processing unit (i.e., server **130**).

Connections **115** can include electrical wires, optical fibers, and/or wireless transmissions. Connections **115** can also include one or more intermediary devices that connect clients **120** to network **110**. Clients **120** can be identified by a unique and/or shared identifier. A unique client identifier can be, for example, a telephone number, an IP address, and/or the like. A shared client identifier can be, for example, a network address, an area code, a country code, a service identifier, and/or the like.

Service identifiers can be unique codes that classify a particular service request into one more classes of services. Service requests can also be classified based on the type of request being requested. For example, service requests can be classified as either being a request message requesting a new session or a request message requesting an update or modification to an existing session. Service requests can also be classified on whether they are a retransmission of a previously transmitted request message (e.g., if a time-out condition instructs the client to retransmit a request). In another example, service requests can be classified as either a request message that does not require a database lookup or a request message that requires one or more database lookups to process. In yet another example, service requests can be classified based on the level of subscription a client has registered for. In yet a further example, service requests can be classified as either related to e-commerce purchase activities or non-e-commerce activities, such as browsing activities. In yet another example, service requests can be classified as being: priority requests, regular requests, or low-priority requests. In general, the priority of requests can be classified into any number of levels (e.g., assigning a priority level from 0 to 10).

Serving different classes of services can consume different resources of server **130**, such as, for example, memory, disk bandwidth, communication bandwidth, and/or processing cycles. In an alternative embodiment, because classification of clients **120** and/or the service requests can be optional, clients **120** and/or the service requests do not have to be identified or classified by an identifier.

Transmission medium **110** can also be coupled to server **130** by a connection **115**. Server **130** can be responsible for providing one or more types of services to one or more clients **120** by processing respective requests for these services from clients **120**. Server **130** can include, for example, a web server, an application server, a media server, a gateway, a softswitch, a telecommunications switch (e.g., a toll or tandem switch), a network router or switch, and/or the like. In some embodiments, in a Peer-to-Peer network for example, server **130** can also request one or more services from other servers (not shown), and therefore can be considered as a client different from clients **120**.

Types of services provided by server **130** can include, for example, voice services, video services, data services, multimedia services, and/or other electronic services. Voice services can include, for example, the establishment, maintenance, and release of services associated with telecommunication networks. For example, for telecommunication networks, session requests leave the network **110** at server **130**. For example, a SS7 IAM message, a SIP protocol INVITE message, or a H.323 SETUP message can be requests to initiate a new telephone call or call session. Likewise, a SIP protocol UPDATE message can be a request to update the state of an existing call session. Video services can include, for example, the establishment, maintenance, and release of streaming video over the Internet. Streaming video can include real-time video and/or on-demand video. Data services can include, for example, web sites (processing HTTP requests), packet routing (routing IP packets), and/or general content delivery. Other services can include, for example, one or more video, audio, and/or data services. In other embodiments, for example, there can be a web server for flight reservation systems, one or more audio servers, e-mail servers, collaboration servers, authentication servers, and/or other server(s).

In particular, protocols such as the Session Initiation Protocol (SIP) and H.323 can be used to create, maintain, and/or tear down sessions for various types of media, including, for example voice, video, and/or text. SIP can be used for many media-oriented applications such as, for example, Voice over IP (VoIP), voicemail, instant messaging, presence, IPTV, network gaming, etc. SIP can also be used as the core protocol for the IP Multimedia Subsystem (IMS), which is a basis for the 3rd-Generation Partnership Program (3GPP) for both fixed and wireless telephone networks.

In one embodiment, for example, server **130** can be a web server that hosts one or more web sites available to clients **120** over the Internet. In another configuration, server **130** can be a tandem switch on the PSTN that receives and processes SS7 signaling messages for setting up and tearing down telephone calls. In another configuration, server **130** can be a MGCP Media Gateway or a H.248/MEGACO Media Gateway that respectively receive requests from Call Agent(s) or Media Gateway Controller(s) (MGCs). In yet another configuration, server **130** can be an application server for processing database requests from other clients **120** on network **110**. In other configurations, server **130** can be, for example, Sonus Networks PSX™, ASX™, GSX™/NBS, and/or AGCF servers.

II. Client-Implemented Overload Control

According to some embodiments of the present invention, external overload control can be implemented at clients **120** (or at intermediate server nodes between client **120** and server **130**, generally referred to as an action location). Client-implemented overload control can advantageously allow clients **120** to reduce offered load to the overloaded server **130**, while not sacrificing processing burden at server **130** for overload control purposes, such that server **130** throughput can be maximized. For example, each client **120** can determine an overload value, based on explicit and/or implicit overload criterions, that is representative of the overload at server **130**. Using this determined overload value as feedback, client **120** can appropriately adjust a rate of transmitting requests for service to server **130**. For example, the transmission rate of service requests to server **130** can be made inversely proportional to the determined overload value. Therefore, client-implemented overload controls can obviate and/or supplement the need for server **130** to allocate processing resources for overload control purposes (e.g., internal overload control), and instead allocate a maximum amount of resources for processing service requests thereby increasing throughput.

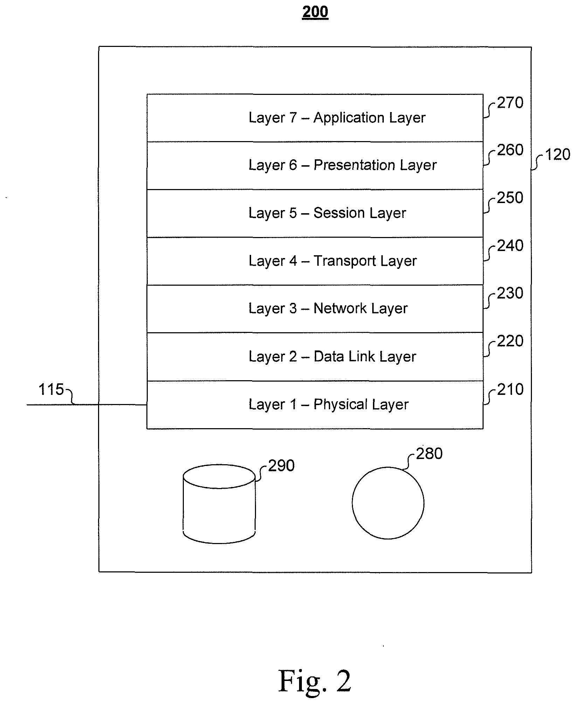

In general, the generation and/or origination of service requests for services can take place at any layer in a communication protocol stack. FIG. 2 is a block diagram **200** showing the components of client **120**. Client **120** includes at least one controller **280**, at least one computer memory module **290**, and can include one or more protocols conforming to one or more layers **210-270** of the Open Systems Interconnection (OSI) Reference Model (as defined in ITU-T Recommendation X.200). The OSI Reference Model is an abstract description for a communication system, which can be divided into seven layers: a physical layer **210**, a data link layer **220**, a network layer **230**, a transport layer **240**, a session layer **250**, a presentation layer **260**, and an application layer **270**. Within each layer, one or more entities can implement a collection of similar functions that provide services to another layer above or below the layer.

Physical layer **210** can provide mechanical, electrical, functional and procedural specifications to activate, maintain, and de-activate physical-connections for bit transmission between data-link-entities. Data link layer **220** can provide functional and procedural specifications for establishment, maintenance, and release of data-link-connections among network-entities and to detect and possibly correct errors that occur in physical layer **210.** Network layer **230** can provide specifications to establish, maintain, and terminate network-connections between sources and destinations on one or more networks, and functional and procedural specifications to exchange data between the sources and destinations. Transport layer **240** can provide transparent transfer of data between session-entities and relieves them from any concern with the detailed way in which reliable and cost effective transfer of data is achieved. Transport layer **240** can also optimize the use of the available network-service to provide the performance required by each session-entity at minimum cost. Session layer **250** can provide specifications that control the dialogues/connections between entities. Session layer **250** can also provide services to establish a session-connection between two presentation-entities, to support orderly data exchange interactions, and to release the connection in an orderly manner. Presentation layer **260** can provide for the representation of information that application-entities either communicate or refer to in their communication. Application layer **270** can interact with the software application resident on client **120**.

The client **120** illustrated in FIG. 2 includes a protocol stack modeled with respect to the seven layers of the OSI Reference Model, but other models and/or layers can also be used. For example, a client **120** can include protocols conforming to only layers **210-230** (e.g., a router or a layer 3 switch). In addition, other models can also be used, such as the TCP/IP model of the Internet, which includes four abstraction layers (link layer, internet layer, transport layer, and application layer). In general, communication protocols do not have to necessarily fall under one of the abstraction layers **210-270**, but can, in some cases, be included in more than one layer.

As described above, requests for service can originate from and/or be generated by one or more protocols in the protocol stack **210-270** of client **120**. Controller **280** can implement overload controls in one or more of the layers of the protocol stack **210-270** to help maintain the throughput and/or delay of service request processing at server **130**. In some embodiments, controller **280** can be a processor or an apparatus. In other embodiments, controller **280** can be a logical function executed by another processor or apparatus in client **120**. As a processor, controller **280** can be configured to execute a computer program to perform the described techniques by operating on input data and/or generating output data. Processors suitable for the execution of a computer program include, by way of example, both general and special purpose microprocessors, and any one or more processors of any kind of digital or analog computer. A processor can receive instructions and data from, for example, a read-only memory or a random access memory or both.

As an apparatus, controller **280** can be implemented as special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), an ASIC (application-specific integrated circuit), or the like. Subroutines can refer to portions of the stored computer program and/or the processor and/or the special circuitry that implement one or more functions.

In FIG. 2, controller **280** is illustrated to be separate from the protocol stack **210-270**, but other configurations can also be used. For example, controller **280** can be incorporated into one or more entities (e.g., the protocols or layers) in the protocol stack **210-270** (e.g., the application layer **270**) or the protocol stack **210-270** can be included in controller **280**. In some embodiments, a controller **280** incorporated in one layer can be provided signals from one or more other protocols or layers in the protocol stack **210-270**. For example, a controller **280** incorporated into the application layer **270** can implement overload control based on signals from the transport layer **240**.

Controller **280** can be communicatively coupled to computer memory module **290**. Computer memory module **290** can include one or more memory devices or memory sub-modules for storing instructions and/or data. Memory devices, such as a cache memory, can be used to temporarily store data. Memory devices can also be implemented as mass-storage devices. Controller **280** and computer memory module **290** can be supplemented by and/or incorporated in special purpose logic circuitry.

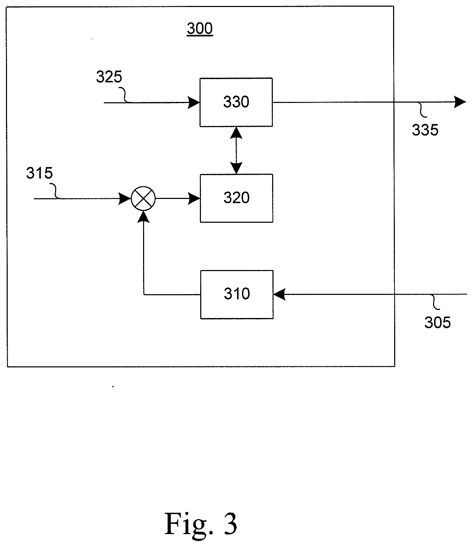

Client-based overload control can be implemented hop-by-hop or end-to-end. Hop-by-hop can include a separate control loop between all neighboring clients 120 and servers **130** that directly exchange traffic. End-to-end can include a control loop along the entire path of a service request. FIG. 3 is a block diagram showing the components of a model control loop **300**. Model control loop **300** can represent, either physically or logically, how a client-based overload control scheme is implemented in one or more layers of the protocol stack **210-270** of client **120**. Model control loop **300** includes a sensor/filter **310** that can receive a feedback signal/value **305** and/or create an implicit feedback value (not shown). Sensor/filter **310** is coupled to a control unit **320** with a reference input **315**. Control unit **320** is coupled to an actuator **330** (e.g., a restrictor), which can electronically adjust the rate at which internal service requests **325** (e.g., offered load) are output **335**. Control unit **320** can determine and submit to actuator **330** the rate setting based on the difference between the feedback value from sensor/filter **310** and reference input **315**. Reference input **315** (e.g., a target overload value) can be the desired value for the system output **335**. Reference input **315** can be fixed and/or can be variable. For example, reference input **315** can be based on the capacity of server **130**. Feedback value **305** and/or system output **335** can be, respectively, received from or sent to connection **115** and/or from one or more of the layers of the protocol stack **210-270**.

Sensor/filter **310** can determine (e.g., measure) an overload value, which can be a rate of explicit overload signals or notifications (e.g., SIP 503 (Service-Unavailable), H.323/Q.931 cause code 42, or H.248 overload notifications) received from server **130**, and/or can be a rate of implicit overload values (e.g., request timeouts). Implicit overload notifications can also include messages received from server **130** that are not intended for overload control purposes (e.g., SIP 480 (Temporarily Unavailable) or H.323/Q.931 41 (Temporary Failure)). Additional overload notification mechanisms can be used to convey overload feedback to clients 120, including, for example, a special SIP response header or a SIP overload event package. The SIP overload event package can enable a sending entity to subscribe to the overload status of a server and receive notifications of overload control status changes in NOTIFY requests.

In some embodiments, the rate of overload notifications (explicit and/or implicit) can be passed through an averaging filter (e.g., included in sensor/filter 310) to smooth the measurements. The average overload notification rate can then be compared to a target overload value **315**, and the difference can be used to drive controller **320**. Controller **320** can adjust the allowed rate (control input) of service requests **335** towards server **130** so as to cause the overload notification rate **305** (feedback value) (and/or an implicit overload value) to converge close to target overload value **315**, which can have a small value. The rejection rate can be a good feedback value as it can reflect the load level on the target system (e.g., server **130**). As the load increases on server **130**, the internal overload control scheme of server **130** rejects more service requests, thus the rate of receiving overload notifications can increase as well, and the rate of change in the rejection can be close to the rate of change of the offered load.

In general, overload notifications measured by sensor/filter **310** can be either explicit and/or implicit. In some embodiments, an explicit overload value can represent, for example, receipt of a SIP request rejection via 503 Service Unavailable responses. An implicit overload value can represent, for example, the lack of response to a service request. In one embodiment, implicit overload criterion can be achieved by tracking the fraction of outstanding requests for service (e.g., requests for which no response has been received). If a fraction of outstanding requests for service in a time interval is equal to or greater than a fractional threshold value, then an overload criterion can be satisfied. Implicit detection can also be achieved, for example, by client **120** starting a timer each time a service request is sent. The timer can be cancelled if a response to the service request is received before a time-out expires. In some embodiments, the duration of the time-out can be set a little greater than the response time that would be expected for a high load at server **130**. Sensor **310** can measure the rate of implicit and/or explicit overload notifications from overloaded server **130**. In some embodiments, the measured rate can be averaged via an exponential weighted moving average (EWMA) low-pass filter. Filter **310** can smooth the stochastics of the measurements and ensure that the control will not be activated by an occasional burst of overload notifications. The EWMA filter can be described as follows:

$$O_{avg}(n+1) = (1-w)O_{avg}(n) + wO_m(n) \qquad 0 \le w < 1, \qquad (1)$$

where $O_m(n)$ can represent the measured overload value at time $n$, $O_{avg}(n)$ can represent the average overload value at time n, and the weight w can represent the time constant of the low-pass filter.

In some embodiments, sensor/filter **310** can measure overload notifications for one or more particular classes of service requests. For example, sensor/filter **310** can determine an overload value for regular service requests only. Alternatively, sensor/filter 310 can determine an overload value for all service requests with a priority value less than a predetermined priority value (e.g., for all service requests with a priority level between 1-6 on a 10-level priority classification). In an alternative or supplemental embodiment, sensor/filter **310** can determine and provide to controller **320** one or more overload values. For example, sensor/filter **310** can provide a first overload value for regular and priority service requests and a second overload value for retransmission requests.

In some embodiments, it can take several overload notification responses to be received at client **120** before the effect of the change in offered load can take effect and can be reflected in the overload notification rate being fed back to client **120**. Thus, if the offered rate is altered on every overload notification, it can prematurely alter the offered load, causing overcorrection and/or considerable oscillation in the offered load. In some embodiments, a waiting period $T_{Wait}$ (or a blind interval period) can be introduced after one or more updates are made to the offered load rate, during which overload notifications are not counted. After the end of this waiting period, the overload notifications can be counted towards the overload notification rate.

Control unit **320** can adapt the allowed service request transmission rate towards server **130** so as to keep the average overload value close to a configured target overload value. Thus, the control can be activated as soon as the average overload value exceeds a target overload value. In some embodiments, control unit **320** can be based on the principle of additive-increase/multiplicative decrease (AIMD), which can additively increase the allowed rate with time. On detecting overload, control unit **320** can then reduce the allowed rate multiplicatively by a certain factor. AIMD control schemes can converge to a stable and fair operating point. With an AIMD algorithm, control unit **320** can increase the allowed rate linearly with a fixed size steps to probe for extra capacity, then, when overload is detected, the allowed rate can decrease multiplicatively by a fixed factor (e.g., 0.5).

In some embodiments, control unit **320** can adapt the allowed rates such that the overload value converges quickly to the target overload value. In other embodiments, to ensure fast reaction to the onset of overload, the rate of change of the allowed rate can be made proportional to the deviation of the overload value from the target overload value. For example, control unit **320** can make small changes to the allowed rate when the overload value is close to the configured target rate. Similarly, control unit **320** can make progressively larger changes to the allowed rate as the overload value departs further from the configured target overload value. This scheme can respond rapidly to sudden changes (increases and/or decreases) in the offered service request transmission rate.

In some embodiments, control unit **320** can adapt the allowed service request transmission rate towards server **130** for one or more particular classes of offered service requests **325**. For example, control unit **320** can adapt the allowed transmission rate for regular service requests while leaving the allowed transmission rate for priority service requests unchanged. Alternatively, control unit **320** can adapt the allowed transmission rate for all service requests with a priority value less than a predetermined priority value (e.g., for all service requests with a priority level between 1-6 on a 10-level priority classification). In an alternative or supplemental embodiment, control unit **320** can separately adapt the allowed transmission rates for one or more classes of offered service requests **325**. For example, the allowed transmission rates for service requests of a first type can be based on a first overload value from sensor/filter **310** and the allowed transmission rate for service requests of a second type can be based on a second overload value from sensor/filter **310.**

Actuator **330** can electronically restrict the rate of transmitting service requests 335 based on the output from controller **320**. Different mechanisms can be used to implement restriction, for example: (1) percentage rejection; (2) request gapping; and/or (3) leaky bucket. The proportional rejection mechanism can admit a percentage of the offered requests **325**, thus the admitted rate can vary as the offered rate changes. Controller **320** can adjust the percentage of allowed service requests to track the offered rate. If using a leaky bucket, controller **320** can update its output less frequently to track the offered rate, which can help the feedback control to stabilize. Request gapping can act similarly to a leaky bucket with a bucket size of one token. In a supplemental embodiment, actuator **330** can include one or more buffers to temporarily store incoming load **325**.

In a supplemental or alternative embodiment, actuator **330** can also restrict transmission of service requests based on classification. In one embodiment, overload-friendly retransmissions can include actuator **330** electronically dropping automatic retransmission of one or more offered service requests **325** that is a retransmission from a prior service request. Overload-friendly retransmission can advantageously provide for automatic control of the aggregate rate towards the overloaded server **130**, which includes new requests and retransmission of old requests. In addition, overload-friendly retransmission can advantageously prioritize retransmission of high priority requests over transmission of regular requests. In general, actuator **330** can prioritize transmission of service requests based on one or more classifications of the offered service requests **325**.

While the components of model control loop **300** are illustrated to be separate in FIG. 3, other configurations can also be used. For example, one or more components of model control loop **300** can be combined into the same unit such as, for example, controller **280**. In addition, client **120** can include one or more additional control loops **300**. In some cases, the additional control loops **300** can be used to control rates of service request transmissions to one or more additional downstream servers. In supplemental or alternative embodiments, the additional control loops **300** can be used to control rates of service request transmissions for different classes of service to the same server **130**.

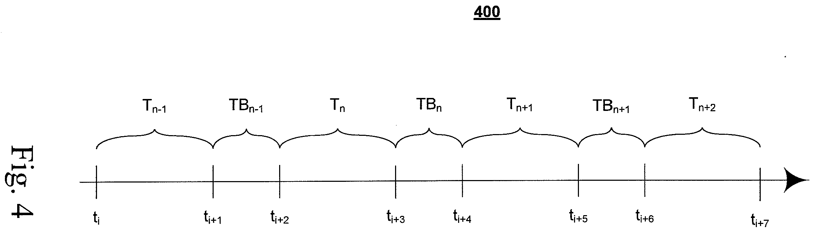

FIG. 4 is a diagram **400** showing windowed time intervals. In some embodiments, client-implemented overload control schemes can be time driven. In time driven schemes, overload values can be measured at predetermined times (e.g., $t_i$, $t_{i+1}$, $t_{j+2}$, etc.) and/or during predetermined periods of time (e.g., $T_{n-1}$, $T_n$, $T_{n+1}$, etc.). One or more blind time intervals (e.g., $TB_{n-1}$, $TB_n$, $TB_{n+1}$, etc.) can be included, during which overload values are not measured. In some embodiments, time periods $T_j$ and/or $TB_j$ can be fixed. In other embodiments, time periods $T_j$ and/or $TB_j$ can be variable (e.g., based on system parameters such as known network latencies and/or system bandwidth).

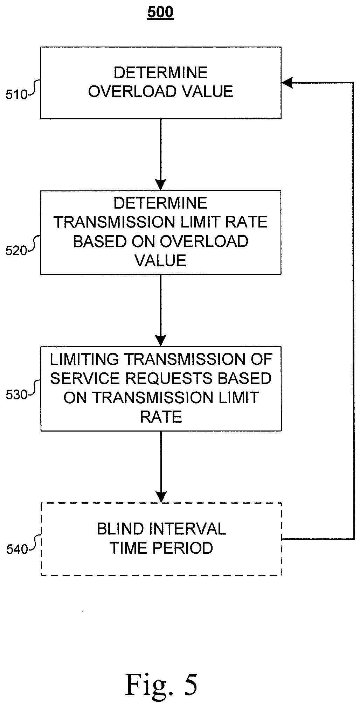

FIG. 5 is a flowchart **500** depicting client-based overload control, performed by controller **280**, of client **120**. The elements of flowchart **500** are described using the exemplary model control loop **300** of FIG. 3. Limiting server overload via client control includes determining an overload value (**510**), determining a transmission limit rate based on the overload value (**520**), limiting transmission of service requests based on the transmission limit rate (**530**), and/or optionally waiting for a blind interval time period (**540**) before determining a new overload value (**510**). In some embodiments, controller **280** can implement the algorithm depicted in flowchart **500** with respect to windowed-time intervals of length T. For example, if the interval of length T is set to be 1 second, then controller **280** performs the elements of flowchart **500** every 1 second. In supplemental or alternative embodiments, controller **280** can implement flowchart **500** on an event-driven basis. For example, if the number of incoming requests **325** received since the last time flowchart **500** was executed exceeds a value N, then controller **280** can execute flowchart **500**. The elements of flowchart **500** can be performed separately for one or more protocols or processes within the protocol stack **210-270** of client **120**, or can be performed concurrently.

In embodiments, an overload criterion is based on an implicit value, i.e. an out-of-order response:

$$O_{n-measured} = \sum_{i=1}^{S_n} OUT\_OF\_ORDER_i \, , \qquad (6)$$

where $S_n$ can represent the number of requests sent during one or more time period (e.g., time period n), and where

$$OUT\_OF\_ORDER_i = \begin{cases} 1 & \text{if } t_{si} < t_{sj} \text{ and } t_{rj} + f < t_{ri} \quad \text{for } j > i \\ 0 & \text{otherwise} \end{cases}, \quad (7)$$

where $t_{si}$ can represent the time that the *ith* request was sent, $t_{ri}$ can represent the time that a response to the *ith* request was received, and $f$ can be a function of $|t_{sj} - t_{si}|$ and/or $|j-i|$. Generally, an overload value can be based on one or more of equations (2)-(7).

Determining an overload value (**510**) can be performed by sensor/filter **310**. Determining an overload value (**510**) for time period $n$, which can be represented as $O_{n\text{-avg}}$, can include determining whether at least two or more requests that were previously transmitted to server **130** satisfy an overload criterion. The overload value $O_{n\text{-avg}}$ can be stored in, for example, computer memory module **290**. In some embodiments, the overload value can be the average number of requests that satisfy an overload criterion, e.g.,

$$O_{n-avg} = O_{n-measured} / T_n \, . \quad (2)$$

Generally, the overload value can be any function $f$ (e.g., a smoothing function) based on the number of overload measurements from one or more prior time periods, e.g.,

$$O_{n-avg} = f\left(O_{n-measured}, O_{(n-1)-measured}, O_{(n-2)-measured}, \dots\right). \quad (3)$$

According to some embodiments, an overload criterion can include receiving an explicit rejection message from server **130**, e.g., $O_{n\text{-}measured} = \Sigma$rejections. In supplemental or alternative embodiments, an overload criterion can be based on an implicit value such as, for example, time-outs:

$$O_{n-measured} = \sum_{i=1}^{S_n} TIMEOUT_i \, , \quad (4)$$

where $S_n$ can represent the number of requests sent during one or more current or prior time periods (e.g., time period n), and where

$$TIMEOUT_i = \begin{cases} 1 & \text{if } t_{ri} - t_{si} > D \quad \text{or} \quad t_{measurement} - t_{si} > D \\ 0 & \text{otherwise} \end{cases}, \quad (5)$$

where $t_{si}$ can represent the time that the *ith* request was sent, $t_{ri}$ can represent the time that a response to the *ith* request was received, $t_{measured}$ can represent the time of the overload measurement, and $D$ can represent a delay threshold. The delay threshold $D$ can be static (e.g., based on prior knowledge of server **130** delay) and/or dynamic (e.g., variably set by client **120**). In some embodiments, a dynamic delay threshold $D_n$ for time $n$ can be $D_n = f_{TO\text{-}Delay} R_n$, where $R_n$ can represent an average response time and $f_{TO\text{-}Delay}$ can be a safety factor (e.g., $\geq 1$). An average response time can be $R_n = \alpha R_{n-1} + (1-\alpha)d,$ where $\alpha$ can represent an averaging factor and $d$ can represent a delay measurement.

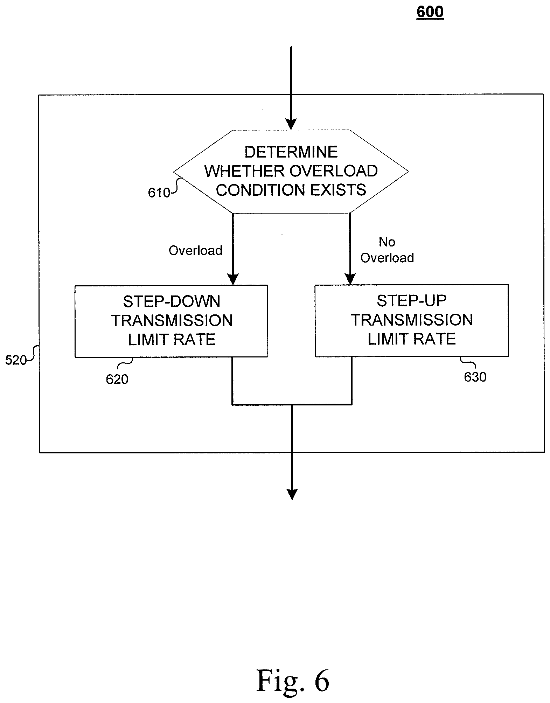

Determining a transmission limit rate based on the overload value (**520**) can be performed by control unit **320**. FIG. 6 is a flowchart **600** depicting determining a transmission limit rate based on the overload value (**520**). Determining a transmission limit rate can include determining whether an overload condition exists (**610**). If an overload condition exists, the transmission limit rate can be stepped-down (**620**). If an overload condition does not exist, the transmission limit rate can be stepped-up (**630**). Determining whether an overload condition exists (**610**) can include comparing the overload value with a target overload value **315**, which can be represented as $O_{target}$.

According to some embodiments, the transmission limit rate, which can be represented as $\lambda_n^*$ for time period $n$, can be stepped-down (**620**) according to $\lambda_{n+1}^* = \lambda_n^* P_{n+1}$, where $P_{n+1}$ can be the percentage of transmission rate:

$$P_{n+1} = P_n \left( 1 + G_{SD} \frac{O_{target} - O_{n-avg}}{O_{n-avg}} \right), \qquad (8)$$

where $G_{SD}$ can represent a controller step-down gain. In alternative or supplemental embodiments, the transmission rate limit can be stepped-down (**620**) according to $\lambda_{n+1}^* = \lambda_n^* + G_{SD}\left(O_{target} - O_{n-avg}\right).$

When the overload value goes below the target overload value, client **120** can enter a step-up phase (**630**). The step-up phase (**630**) can continue if: (1) the overload value is below the target overload value; and (2) the arriving load ($\lambda$) **325** is above the rate allowed at controller **320** ($\lambda^*$). In some embodiments, the step-up phase can be divided into two sub-phases: "overload-recovery" and "overload-prevention." During overload-recovery, controller **320** can try to recover to the average allowed rate before the overload event. During overload-prevention, controller **320** can increase the allowed rate slowly. In supplemental or alternative embodiments, if the arriving load ($\lambda$) **325** is below the rate allowed at controller **320** ($\lambda^*$), then the rate allowed at controller **320** ($\lambda^*$) can be left unchanged.

The transmission limit rate can be stepped-up (**630**) according to $\lambda_{n+1}^* = \lambda_n^* + step\_size$, where $step\_size$ can be fixed. Alternatively, $step\_size$ can be determined according to $step\_size = G_{SU}\left(rate_{max} - \lambda_n^*\right)$, where $G_{SU}$ can represent a step-up gain and where

$$rate_{max} = \begin{cases} \lambda^{avg} & if \ \lambda_n^* < \lambda^{avg} \\ \overline{\lambda} & if \ \lambda_n^* \geq \lambda^{avg} \end{cases}, \qquad (9)$$

where $\overline{\lambda}$ can represent a large pre-configured value that can be based on the maximum share that client **120** can have with server **130,** and where $\lambda^{avg}$ can represent the average offered load **325** before entering overload, or before entering the step-down phase. When $\lambda_n^* < \lambda^{avg}$, which can be referred to as "overload recovery," client **120** can attempt to recover to the average offered load before the overload state. When $\lambda_n^* \geq \lambda^{avg}$, which can be referred to as "overload avoidance," client **120** can attempt to probe server **130** to avoid future overload. In an alternative embodiment, $\lambda^{avg}$ can represent the rate of incoming requests **325** at time $n$. The $step\_size$ value can be bounded above at $step\_size_{max}$ and/or can be bounded below at $step\_size_{min}$. The step-up gain $G_{SU}$ can be fixed and/or variable. For example, $G_{SU}$ can be assigned a lower gain when $\lambda_n^* \geq \lambda_n$ in order to be more conservative. In yet other alternative or supplemental embodiments, $step\_size$ can be determined according to $step\_size = \left(rate_{max} - \lambda_n^*\right)/2$.

During the probing phase (i.e., step-up phase), if the current offered load **325** exceeds the maximum rate $rate_{max}$ and the maximum rate $rate_{max}$ is below $\overline{\lambda}$, then the maximum rate $rate_{max}$ can be set to $\overline{\lambda}$. During the probing phase, if the average overload value from sensor/filter **310** exceeds the target overload value **315**, then client **120** can (re-)enter step-down phase and can record the current transmission limit rate as the current value for the maximum rate $rate_{max}$. For example, client **120** can record the current transmission limit rate as the current value for $\lambda^{avg}$.

The transmission limit rate $\lambda_{n+1}^*$ is passed to actuator **330**. Actuator **330** can transmit **335** incoming service requests **325** at a rate limited by (e.g., less than or equal to) the transmission limit rate $\lambda_{n+1}^*$.

Waiting for a blind interval time period (**540**) before determining a new overload value (**510**) can be based on a blind time interval, $T_{blind}$, that can be static (e.g., based on prior knowledge of average response time from server **130**) and/or dynamic (e.g., variably set by client **120**). In some embodiments, a blind time interval can be based on an active measurement of the average request-response delay as follows:

$$R(n+1) = \alpha R(n) + (1-\alpha)d, \qquad (10)$$

where $R_n$ can represent average response time, $\alpha$ is averaging factor and $d$ is delay measurement. The blind time interval $T_{blind}$ at time n+1 can be set as follows:

$$T_{blind}(n+1) = f_{blind}R(n+1), \qquad (11)$$

where $f_{blind}$ can represent a safety factor greater than or equal to 1. Another method to dynamically set $T_{blind}$ can include saving the sequence number $N_{init}$ and the time of sending the first request after reducing the rate, and initiate $T_{blind}$ at this point. $T_{blind}$ can end after receiving a response for a request that has a sequence N higher than $N_{init}$.

Client **120** can exit overload, setting $\lambda_n^* = \lambda_n$, if it stays for a predetermined amount of time without rejecting new requests and the overload value stays below the target overload value.

III. Computational Results

A quantitative investigation illustrates how client-implemented overload control adapts appropriately under different overload profiles, target server capacities, and load distributions. The simulations below use the packet-level simulator OPNET, which has been extended with an SIP module, as well as modules to implement internal and external overload controls in SIP servers. The SIP model implements SIP RFC 3261. The network topology included user agents (UAs) connected to an edge proxy that forwards the UA requests to a core proxy. Each edge proxy was connected to ten UA clients and ten UA servers. The number of edge and core proxies was varied between different simulation scenarios. Each UA client generated calls which are represented by an INVITE transaction followed by a BYE transaction.

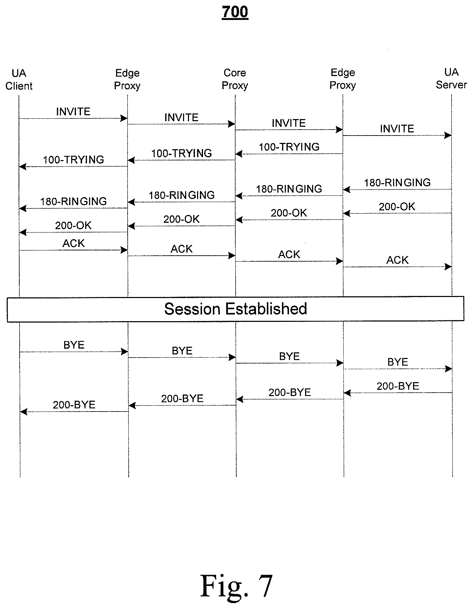

FIG. 7 is a ladder diagram **700** illustrating the simulated model SIP message flow for establishing a session. Calls generated at the UA clients follow a Poisson arrival model, and the destination UA server is selected randomly from all the available UA servers in the network. The edge proxy can reject a request if all the core proxies are overloaded. Core proxies can forward the requests to the edge proxy of the destination UA. The proxies can be represented as a finite queue that holds the arriving SIP messages, and serves them (e.g., retransmits them) at a constant rate. This service rate defines the proxy message processing capacity. In this simulation, edge proxies are assumed to have infinite capacity, while core proxies are set to have a finite capacity. This assumption allows the study of the overload behavior at the core proxies and is a reasonable assumption as core proxies process the aggregate load from multiple edge proxies. All of the SIP messages in this simulation are transmitted over UDP, thus ensuring the reliability of messages, via retransmissions, is done by SIP. Table I lists the settings used for the simulation (see also Ahmed Abdelal, Wassim Matragi, "Signal-Based Overload Control for SIP Servers", In Proceedings of IEEE Consumer Communications and Networking Conference (CCNC), January 2010, which is hereby incorporated by reference herein in its entirety).

Table I
Simulation Settings

| | |
|---|---|
| Core Proxy Capacity | 500 messages |
| Core Proxy Queue Size | 500 messages |
| Call Holding Time | 30 seconds |
| Overload Control Termination Timer | 120 seconds |
| Step up Gain ($G_{SU}$) | 0.5 |
| Step down Gain ($G_{SD}$) | 0.8 |
| Additive Increment (*aINC*) | 10 calls/sec |
| Waiting Period ($T_{blind}$) | 1 second |
| Target Overload Value ($O_{target}$) | 3 |

In the SIP simulation, a full call leads to a load of seven messages though the proxies (five messages for the INVITE transaction and two messages for the BYE transaction). Given the core proxy message processing capacity of 500 messages/sec, the capacity of each core proxy is $\sim 72$ calls/sec. In the following results, the proxy/network throughput is used as a performance metric. The throughput represents the rate of successful calls. A call is defined to be successful if the UA client receives the 200-OK in less that 10 seconds, and the UA server receives INVITE-ACK. The call setup delay is defined as the time between sending the initial INVITE request to receiving 200-OK. All simulations were run long enough to ensure the system reached a consistent behavior.

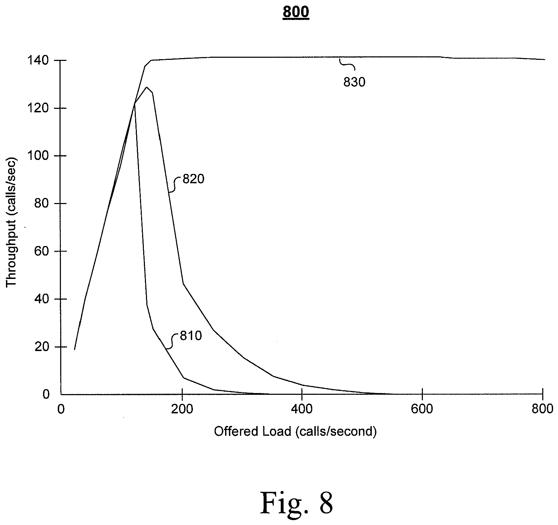

FIG. 8 is two-dimensional plot **800** of the results of the simulation illustrating throughput versus offered load for no overload scheme **810**, server-based internal overload scheme **820** utilizing a queue-based implementation, and client-based overload scheme **830**. Without overload control, the throughput decreases rapidly to zero as the offered load increases above the aggregate capacity of the proxies ~ 142 calls/sec. This is caused by dropped SIP messages due to queue overflow, followed by SIP request retransmissions from upstream clients. Internal overload controls achieve a little bit better throughput than no overload control, because rejecting workload requires less effort than accepting it. Client-based overload control achieves ~ 142 Calls/Sec throughput.

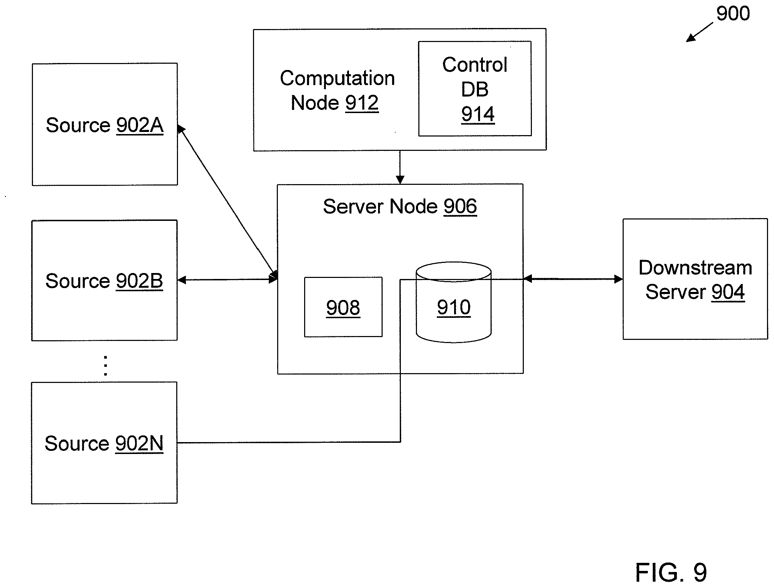

FIG. 9 is a schematic illustration of a network 900 for detecting and limiting focused server overload, according to an illustrative embodiment of the invention. The network 900 (e.g., transmission medium 110 of FIG. 1) includes sources 902A, 902B through 902N (collectively sources 902). In some examples, for a telecommunication network, session requests for a communication protocol enter the network 900 through sources 902 (e.g., referencing FIG. 1, calling clients 120 transmit session requests through connections 115 to the sources 902). For example, the communication protocol can be session initiation protocol (SIP), hypertext transfer protocol (HTTP), Stream Control Transmission Protocol (SCTP), transmission control protocol (TCP), and any other type of session/connection based protocol (e.g., protocols that follow a request-response methodology). Data passes from the sources 902 to the downstream server 904 (e.g., the server 130 of FIG. 1). The network also includes a server node 906 in connection with sources 902A and 902B and the downstream server 904. Server node 906 includes a processor 908 and a computer memory module 910 (e.g., a database). A computation node 912 is in communication with the server node 906. The computation node 912 includes control database 914.

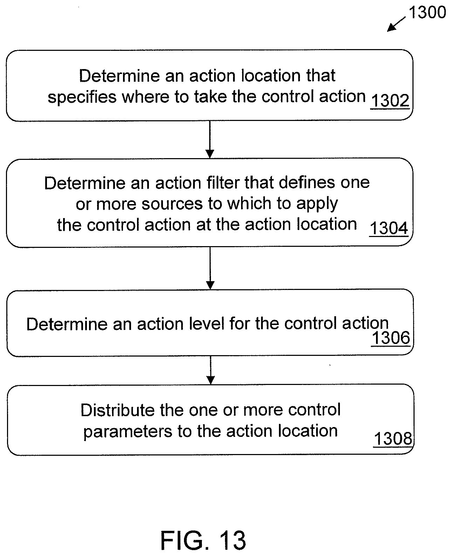

While the network 900 illustrates only one server node 906 and one downstream server 904, the network 900 can be configured to include any number of server nodes (e.g., intermediate nodes between the sources 902 and the downstream server 904) and/or downstream server 904. An intermediate node is any node that is not a source (e.g., sources 902) or a downstream server (e.g., downstream server 904). Data from the sources 902 leaves the network 900 via the downstream server 904 (e.g., session requests from the sources 902 leave the network 900 via downstream server 904). The computation node 912 is capable of processing data it receives (e.g., via server node 906). In some embodiments, the control database 914 is a central database that is used by the computation node 912 to transfer control parameters (i.e., control information) to one or more action locations (e.g., intermediate nodes, such as server node 906) as is described in further detail with reference to FIGS. 13-14B.

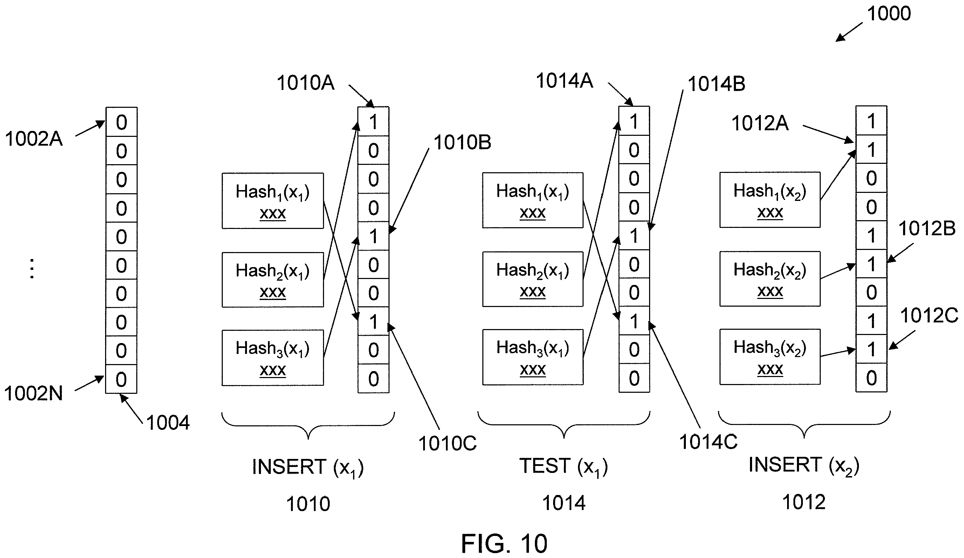

FIG. 10 is a schematic illustration of a bloom filter 1000 for storing and detecting focused server overload in a network, according to an illustrative embodiment of the invention. Bloom filter 1000 is implemented by a storage device (e.g., computer memory module 910 and/or control database 914) in which keys (e.g., $x_1$ and $x_2$) are mapped to counters 1002A through 1002N (collectively counters 1002) in an array of counters 1004 by one or more hash functions (e.g., hash functions $Hash_1$ through $Hash_3$). In some embodiments, the array of counters 1004 is an array of counter bits which can be set to either 0 or 1 (where a 0 value indicates non-membership in the bloom filter and 1 indicates membership within the bloom filter). In some embodiments, the hash functions and the array of counters 1004 are a counting bloom filter (or a Multi-Level Bloom Filter (MLBF)), where the array of counters 1004 is an array of counting integers. For example, a MLBF includes multiple thresholds, which can be associated with different calls or sessions. For high priority calls or sessions, high thresholds are used, while for low priority calls or sessions, low thresholds are used. Each time a value is inserted into the bloom filter 1000, the counting integers determined by the hash functions are incremented (e.g., from 0 to 1 to 2, etc. for each insertion, rather than being set to either 0 or 1).

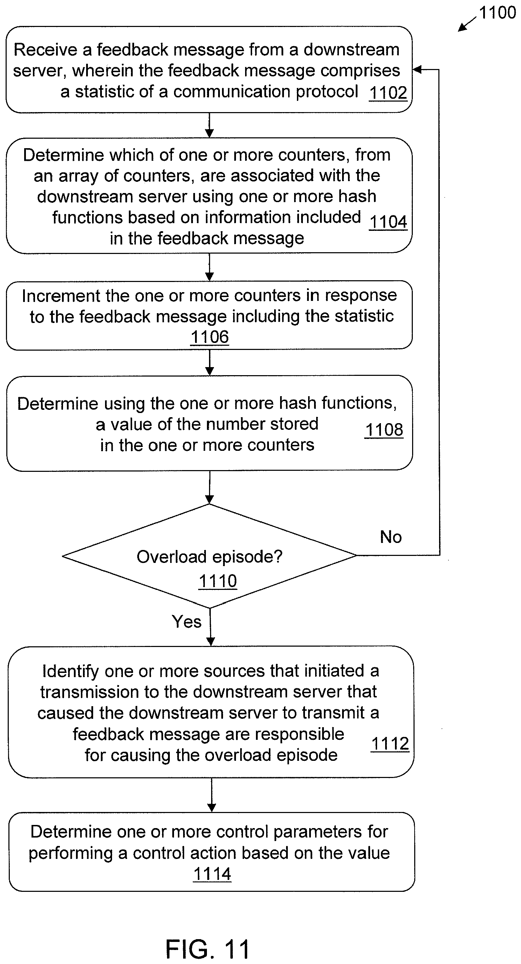

A hash function is a function that takes an arbitrary data stream as input (e.g., the name of a downstream server, such as downstream server 904) and returns an integer as output. The returned integer is used to identify a counter 1002 of the array of counters 1004 (e.g., all counters 1002 in array of counters 1004 are set to 0). Therefore, the bloom filter 1000 uses multiple hash functions (e.g., hash functions $Hash_1$ through $Hash_3$) to map a single key to multiple counters 1002 within array of counters 1004. In this embodiment, two operations can be performed on the bloom filter 1000: INSERT(*key*) (e.g., INSERT ($x_1$) 1010 and INSERT ($x_2$) 1012) and TEST(*key*) (e.g., TEST($x_1$) 1014). The functionality of one embodiment of bloom filter 1000 is described with reference to FIG. 11 below.

The bloom filter 1000 can be used to keep track of a number of statistics for communication protocols. For example, if the network (e.g., network 900) uses SIP, the bloom filter 1000 stores the number of session rejections for downstream server 904, a failed connection request from a source 902 to the downstream server 904, an overload notification from the downstream server 904, and any other useful communication protocol statistic. Bloom filters provide a computationally and spatially efficient structure for storing information (e.g., feedback message statistics such as session rejection statistics and/or other overload feedback from the downstream server 904) in a distributed fashion. Advantageously, bloom filters have a constant insertion time, a constant test time, and a finite probability of false positives (e.g., the number of times a bloom filter will indicate a key is present in the bloom filter, even if it has not been set). Additionally, the bloom filters are extremely compact for storage purposes, and multiple bloom filters can be aggregated through addition. For example, a plurality of arrays of counters can be used (e.g., in network 900), wherein each of the plurality of arrays of counters is stored at a different server node (e.g., in an embodiment where network 900 comprises a plurality of server nodes 912, or where the intermediate nodes 906 are configured as server nodes to store the counting bloom filters). A central server node (e.g., computation node 912) can aggregate the plurality of arrays of counters to calculate how many feedback messages have been received from each downstream server (e.g., from downstream server 904) associated with the plurality of arrays of counters across the different server nodes.

FIG. 11 is a flowchart illustrating a method 1100 for detecting focused server overload in a network, according to an illustrative embodiment of the invention. At step 1102, the server node 906 receives a feedback message from a downstream server (e.g., downstream server 904). The feedback message includes a statistic of a communication protocol (e.g., a SIP session rejection from the downstream server 904). At step 1104, the server node 906 determines which of one or more counters, from an array of counters (e.g., the array of counters 1004, which can be stored in computer memory module 910), are associated with the downstream server using one or more hash functions (e.g., hash functions $Hash_1$ through $Hash_3$) based on information included in the feedback message (e.g., based on the name of the downstream server 904). The one or more counters store a number corresponding to how many feedback messages have been received from the downstream server that include the statistic (e.g., how many session rejections have been received from the downstream server 904).

At step 1106, the server node 906 increments the one or more counters in response to the feedback message including the statistic. At step 1108, the server node 906 determines, using the one or more hash functions, a value of the number stored in the one or more counters. At step 1110, the server node 906 determines whether the value is indicative of an overload episode in the network (e.g., network 900) for the downstream server based on whether the value satisfies a predetermined criteria. If the value is not indicative of an overload episode, the method proceeds back up to step 1102. If the value is indicative of an overload episode, the method 1100 proceeds to step 1112, where the server node 906 (and/or the computation node 912) identifies one or more sources (e.g., one or more sources from sources 902) that are responsible for causing the overload episode, wherein each source initiated a transmission to the downstream server that caused the downstream server to transmit a feedback message including the statistic. At step 1114, the server node 906 (and/or the computation node 912) determines one or more control parameters for performing a control action based on the value.

With respect to step 1104, the systems and methods of the present invention keep track of communication protocol statistics (e.g., session rejections) at each server node in the network (e.g., server node 906 in network 900) for downstream servers (e.g., downstream server 904). In one embodiment, each server node uses a counting bloom filter to maintain tallies of the communication protocol statistics of interest on a server node by server node basis. Every time a server node receives a feedback message that includes the communication protocol statistic, the server node updates the counting bloom filter corresponding to that server node and the counters for the combined destination key incremented.

Although the receipt of the communication protocol statistics is described above as feedback messages transmitted to the server node from the downstream server, the server node can observe the feedback messages (e.g., session rejection notifications) can be observed in a number of ways. For example, the server node can observe the feedback messages explicitly (e.g., via an implementation on a network element, such as the server node 906, in the path of the feedback messages, such as session signaling messages). The server node can observe the feedback messages implicitly (e.g., by examining server logs, such as Call Detail Records within a VoIP/IMS network).

To INSERT a key into a bloom filter, N hash values are created by applying each hash function of the *N* hash functions to the key. The *N* positions in the bit vector that correspond to these N hash values are then incremented (e.g., set to 1, incremented by 1, etc.). Referring to FIGS. 9 and 10, the server node 906 determines which of one or more counters 1002 from the array of counters 1004 are associated with the downstream server using the three hash functions $Hash_1$ through $Hash_3$, where the key is an identifier for the downstream server, such as the name of the downstream server 904. For example, if the server node 906 needs to store data to represent that a feedback message was sent from downstream server 904, the server node 906 can execute $INSERT(x_1)$ 1010 to insert a new value into the bloom filter 1000, where $x_1$ is the name of the downstream server 906. As shown in FIG. 10, INSERT $(x_1)$ 1010 uses the three hash functions $Hash_1$ through $Hash_3$ to identify positions 1010A, 1010B and 1010C within the array of counters 1004 that are associated with $x_1$ (the name of downstream server 906). If, for example, the server node 906 needs to store data to represent that a feedback message was sent from a different downstream server (not downstream server 904), the server node 906 can execute $INSERT(x_2)$ 1012 to insert a new value into the bloom filter 1000, where $x_2$ is the name of the different downstream server. As shown in FIG. 10, INSERT $(x_x)$ 1012 uses the three hash functions $Hash_1$ through $Hash_3$ to identify positions 1012A, 1012B and 1012C within the array of counters 1004 that are associated with $x_2$ (the name of the different downstream server).

With respect to step 1106, the one or more counters 1002 are incremented to increase the count (e.g., from 0 to 1, from 1 to 2, etc.) of the number of communication protocol statistics (e.g., feedback messages that include the statistic) received from a particular downstream server. In some embodiments, the server node 906 linearly increments the counters 1012A, 1012B, and 1012C based on the number of communication protocol statistics (e.g., the server node 906 can increment by the integer x for each communication protocol statistic). For example, as shown in FIG. 10, the sever node 906 increments the counters 1012A, 1012B and 1012C by one (i.e., from 0 to 1). In some embodiments, the server node 906 can increment the one or more counters by a number greater than one (e.g., by 2, 3, etc.). The number greater than one can be determined based on the statistic the server node 906 is monitoring, statistics received from the downstream server 904 over a period of time (e.g., statistics received during a five minute window), a type of transmission from the source to the downstream server (e.g., based on a type of call made by the source, where high priority calls/sessions can be weighted less than normal calls/sessions so high priority calls/sessions have a high probability of success), and/or statistics received from the downstream server 904 over a plurality of periods of time (e.g., statistics received during a predetermined five minute window over three consecutive days). In some embodiments, the server node 906 increments the counters 1012A, 1012B, and 1012C based on a nonlinear function (e.g., the increment value x can be based on the value of the Retry-After parameter in the SIP 503 (Service Unavailable) response, the overload level returned in the call/rejection rejection response).

With respect to step 1108, the server node 906 determines the number of communication protocol statistics received for a downstream server from the one or more downstream servers in the network (e.g., the network 900 of FIG. 9). In one embodiment, the server node determines the number of communication protocol statistics received for each downstream server based on the counts (or tallies) of the communication protocol statistics stored in a bloom filter. To TEST whether or not a *key* has been set in a bloom filter, the *N* hash values are calculated on the key as during insertion using the *N* hash functions. If all N corresponding bit positions in the vector have been set, the key is said to be "in" the bloom filter. For example, referring to FIG. 10, the TEST($x_1$) 1014 operation tests to see whether or not a given key, $x_1$, has previously been inserted into the array of counters 1004 for the bloom filter 1000. The hash functions $Hash_1$ through $Hash_3$ identify counters 1014A through 1014C, respectively. Counters 1014A through 1014C correspond to the same counters identified during INSERT($x_1$) 1010 because the hash functions will generate the same values for a particular key (which, in this case, is $x_1$). Therefore, the bloom filter 1000 determines that the value at each counter 1014A through 1014C is set to 1, indicating the key $x_1$ is in the bloom filter 1000 and has a value of 1 (e.g., for a counting bloom filter, the key $x_1$ has been inserted into the bloom filter 1000 once, which indicates the communication protocol statistic has been observed once for key $x_1$). If, for example, the key $x_1$ had been inserted fifteen times, then the value at counters 1014A through 1014C would be "15" instead of "1."

With respect to step 1110, the predetermined criteria by the server node 906 can be, for example, a threshold (e.g., a count value of "25"), and determining there is an overload episode includes determining the value is greater than the threshold. In some embodiments, the predetermined criteria is calculated using hysteresis (e.g., is based on both the current value and the previous history of values). For example, in control theory, hysteresis can be used to keep a system output at some target value (e.g., X). Two thresholds can be defined: (1) a lower threshold set to X - $\Delta$, and (2) an upper threshold set to X + $\Delta$. In this case, the control will be enabled when the system state exceeds the upper threshold (i.e., X + $\Delta$) for a consecutive number of samples, while it will be disabled when the system state goes below the lower threshold (i.e., X - $\Delta$) for a consecutive number of samples. Advantageously, this can prevent the control from thrashing between on/off states.

For example, with respect to step 1110, the predetermined criteria by the server node 906 can be, for example, a threshold defined by a lower threshold and an upper threshold (e.g., a count value of "23" and a count value of "25"). and determining there is an overload episode includes determining the value is greater than the threshold. At any point in time if the system state is between the upper and lower thresholds, the system can not determine whether there is an overload episode (e.g., the state of the control; on/off) without looking to the previous history of values.

In some embodiments, the bloom filters are maintained on a per server node basis (e.g., one bloom filter per server node). The counters for each bloom filter may be collected at each server node as described above and/or at an aggregate level. For example, the bloom filters may be periodically aggregated (e.g., once every 30 seconds by the computation node 912) to calculate the communication protocol statistics (e.g., session reject distribution counts) across a broader scope (e.g., server node wide or network wide, rather than on a server node by server node basis). In some embodiments, the server node 906 and/or the computation node 912 can detect an overload episode by using statistical methods. For example, the Holt Winters method can be used. The Holt Winters method is an anomaly detection algorithm that makes use of multiple exponentially weighted moving averages of a time series. Holt Winters can incorporate, for example, a single seasonal variation in data series, such as the diurnal variation (e.g., fluctuations that occur during each day) in traffic volumes that are typical in telecommunications networks. Holt Winters can be used to track the mean of a data series, and to predict the acceptable value range, given a user-specified model which incorporates seasonal variation. If data values fall outside of the predicted range of acceptable values, an anomaly is declared.

With further respect to step 1110, once an overload episode has been detected for a particular downstream server, the appropriate information is passed on to the identification phase of step 1112. This information can include, for example, an indication that there is an overload episode in the network, and a bloom filter that has the overloaded downstream server counters (e.g., bits or integers) marked. In some examples, the bloom filter passed to the identification phase can be the same bloom filter used to keep track of the communication protocol statistics.

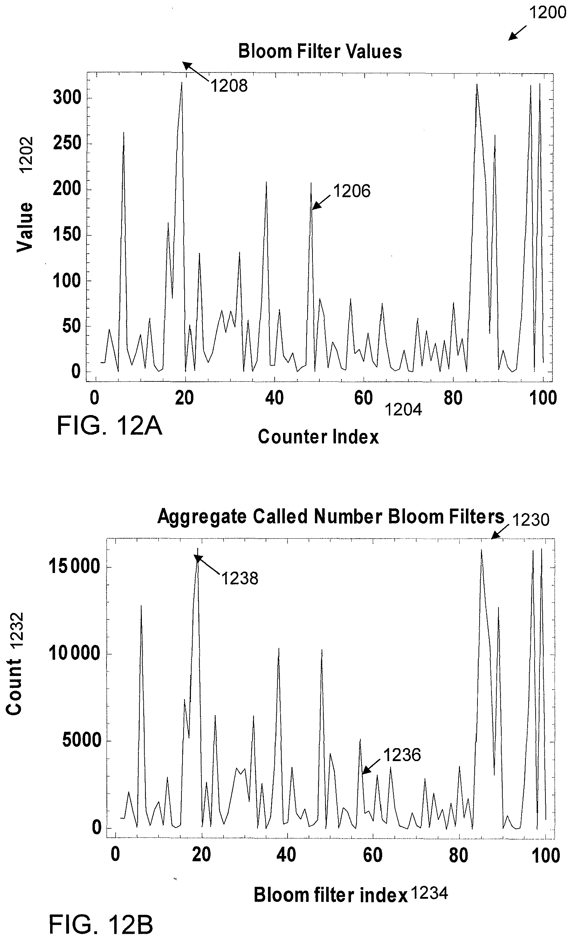

With further respect to step 1110, it is advantageous to perform the detection in a manner that is, for example, efficient in terms of computation as well as communication bandwidth. Advantageously, the use of bloom filters provides an extremely efficient way to perform the detection. FIG. 12A is a schematic illustration of a chart 1200 for a counting bloom filter (e.g., a bloom filter for a particular server node) for detecting focused server overload in a network, according to an illustrative embodiment of the invention. The chart 1200 includes values 1202 along the vertical axis that are indicative of a count for a particular counter (e.g., for a counter of the array of counters 1004 of FIG. 10). The chart 1200 also includes a counter index 1204 along the horizontal axis that indicates the position of a each counter within the array of counters (e.g., the first counter, the second counter, etc.). The chart 1200 also includes a graphed line 1206 that displays the value 1202 for a particular counter index 1204. Chart 1200 visually depicts information stored in a bloom filter, which is used to detect focused server overload. For example, peak 1208 shows a value of approximately 320 for the counter at index location 19. The bloom filter maps the information at the counter index to a particular key value (e.g., a downstream server name). For example, the downstream server mapped to index location 19 is associated with a value of 320 (e.g., there were 320 session rejections sent from the downstream server to the device storing the bloom filter associated with chart 1200 (e.g., server node 906)).

FIG. 12B is a schematic illustration of a chart 1230 for an aggregate counting bloom filter (e.g., a bloom filter indicative of aggregate values of a plurality of bloom filters spread across a plurality of server nodes, such as that shown in FIG. 12A) for detecting focused server overload in a network, according to an illustrative embodiment of the invention. The chart 1230 includes values 1232 along the vertical axis that are indicative of a count for a particular counter across the plurality of bloom filters (e.g., the sum of the counter value of each array of counters for a particular counter index). The chart 1230 also includes a bloom filter index 1234 along the horizontal axis that indicates the position of a each counter within the plurality of aggregated bloom filters (e.g., the first counter, the second counter, etc. for each bloom filter). The chart 1230 also includes a graphed line 1236 that displays the value 1232 for a particular bloom filter index 1234. Chart 1230 visually depicts information stored across a plurality of aggregated bloom filters, which is used to detect focused server overload. For example, peak 1238 shows that the value of approximately 320 for the counter at index location 19 of FIG. 12A has increased to approximately 15100 once all the bloom filters of the network have been aggregated. The node (e.g., the computation node 912) maps the information at the counter index for the aggregated bloom filters to a particular key value (e.g., a downstream server name). For example, the downstream server mapped to index location 19 is associated with a value of 15100 (e.g., there were 15100 session rejections transmitted from the downstream server to the devices storing the bloom filters whose values are aggregated in chart 1230).

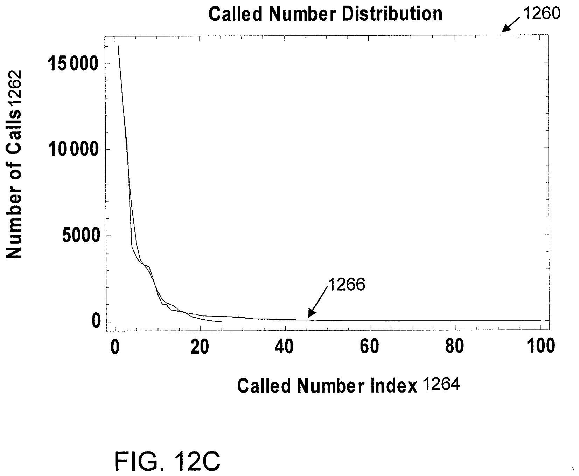

FIG. 12C is a schematic illustration of a chart 1260 for an aggregate called number distribution for detecting focused server overload in a network, according to an illustrative embodiment of the invention. The chart 1260 is a histogram that graphs the number of calls 1262 for each called number index 1264 (e.g., for each number called in a telecommunication protocol). Through mathematical manipulation, the aggregate bloom filter of FIG. 12B can be used to calculate the network-wide communication protocol statistic histogram (e.g., a session rejection histogram) shown in chart 1260. The server node 906 and/or the computation node 912 can use the chart 1260 to determine the frequency of communication protocol statistics to a particular downstream server. For example, the computation node 912 can use the chart 1260 to determine the number (or value) of session rejections from sources 902 to a particular destination number, where the destination number is reached through downstream server 904. Anomaly detection techniques are then applied to this chart (or histogram) 1260 as described above to determine whether or not there is an overload episode.

With respect to step 1112, the sources of the transmissions that are causing any overload episode detected in step 1110 can be detected based on the receipt of a feedback message. For example, the bloom filters at a server node can maintain communication protocol statistics on a per destination basis (e.g., based on the downstream server destination). For telecommunication networks, for example, when a session request is received, the destination can be used as a key into the bloom filter as described above. A TEST on the destination key can determine if the destination is currently overloaded or not, and will identify the source of the request (e.g., one of clients 120) as a source of congestion for an overload episode.

With respect to step 1114, the control action reduces a transmission rate of data from one or more sources (e.g., sources 902) responsible for causing the overload episode to the downstream server (e.g., the downstream server 904). FIG. 13 is a flowchart illustrating a method 1300 for determining one or more control parameters for limiting focused server overload in a network, according to an illustrative embodiment of the invention (e.g., for determining one or more control parameters in step 1114 of FIG. 11). At step 1302, the computation node 912 (or the server node 906) determines an action location that specifies at which server node or other network element to take the control action. At step 1304, the computation node 912 determines an action filter that defines one or more sources to which to apply the control action at the action location. At step 1306, the computation node 912 determines an action level for the control action (e.g., using hysteresis). At step 1308, the computation node 912 distributes the one or more control parameters to the action location.

With respect to step 1302, the action location value can be either a wildcard (e.g., control parameters are applied network wide at every server node) or a specific tuple that specifies a particular server node (e.g., network switch), communication group (e.g., trunk group), etc. The choice of the action location can be a policy level decision that is determined a priori. For example, the action location can be determined such that the control parameters apply the action at all sources (e.g., ingress nodes). As another example, for a telecommunications network, calls on an incoming trunk group that match the identified destination number can be rate limited by a server node that receives calls from the incoming trunk group).

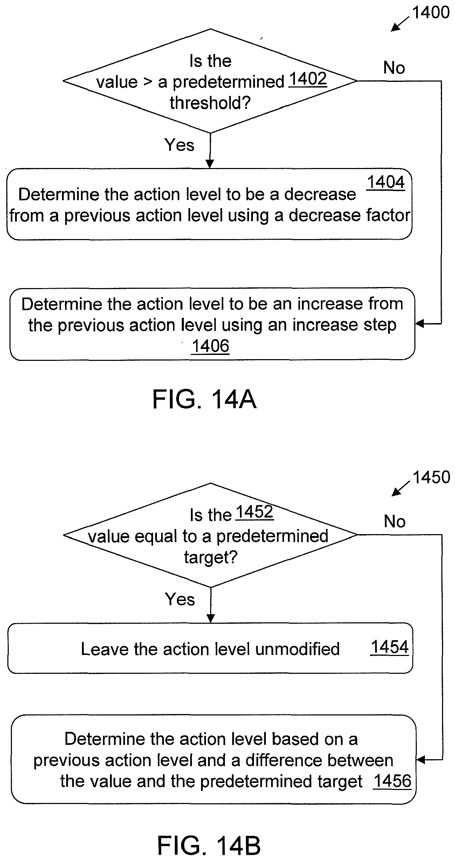

With respect to step 1304, the action filter can be calculated based on the identified sources causing the overload episode. With respect to step 1306, the action level can be calculated using a number of algorithms. FIGS. 14A and 14B are flowcharts that illustrate methods for determining an action level for limiting focused server overload in a network, according to an illustrative embodiment of the invention. FIG. 14A illustrates method 1400 for determining an action level. At step 1402, the computation node 912 (or the server node 906) determines if the value is greater than a predetermined threshold. If the value is greater than the predetermined threshold, the method proceeds to step 1404, and the computation node 912 determines the action level to be a decrease from a previous action level using a decrease factor. If the value is less than the predetermined threshold, the method proceeds to step 1406, and the computation node 912 determines the action level to be an increase from the previous action level using an increase step.

With respect to steps 1402 - 1406, the method can use the following equation:

$$
\begin{aligned}
&\text{while True:} \qquad\qquad\qquad\qquad\qquad\qquad\qquad\qquad\qquad\qquad (12)\\
&\quad \text{if } VALUE > \theta:\\
&\qquad ACTION\_LEVEL[\text{k+1}] = ACTION\_LEVEL[\text{k}] \times \beta\\
&\quad \text{else:}\\
&\qquad ACTION\_LEVEL[\text{k+1}] = ACTION\_LEVEL[\text{k}] - \text{step}\\
&\quad \text{k} = \text{k} + 1\\
&\quad \text{sleep } T, \text{ where:}
\end{aligned}
$$

$VALUE$ = the value for the current communication protocol statistic (e.g., a session rejection count);
$\beta$ = the multiplicative increase in allowed inter-call gap time $\beta > 1$ (e.g., 1.1);
step = the additive decrease in allowed inter-call gap time (units of ms, e.g., 10 ms);
$\theta$ = be the control signal target (e.g., the threshold);
$T$ = the periodic action calculation interval; and
$ACTION\_LEVEL[\text{k}]$ = the action level during the kth interval (e.g., an inter-call gap time of 50 ms), which can be bounded between maximum and minimum values (e.g., a minimum of 40 ms and a maximum of 60 ms).

Referring to step 1402, every T seconds, a new action level is calculated based on theta. The initial $ACTION\_LEVEL[\text{k}]$ is set, for example, to a starting value (e.g., a call gap in units of ms, such as 10 ms). The computation node 912 (or the server node 906) determines if the $VALUE$ is greater than $\theta$. Referring to step 1404, if $VALUE$ is greater than $\theta$, the computation node 912 calculates a multiplicative increase in the call gap (which is a decrease in the allowed request rate). Specifically, with reference to equation 12, $ACTION\_LEVEL[\text{k+1}]$, the current action level during the kth interval, is calculated as a multiplicative increase over the previous action level $ACTION\_LEVEL[\text{k}]$. Referring to step 1406, if $VALUE$ is less than or equal to $\theta$, the computation node 912 calculates an additive decrease in the call gap (which is an increase in allowed request rate). Specifically, with reference to equation 12, $ACTION\_LEVEL[\text{k+1}]$ is calculated as an additive increase over the previous action level $ACTION\_LEVEL[\text{k}]$. Advantageously, equation 12 is easy to configure and executes quickly on a processor (e.g., processor 908 of the server node 906).

FIG. 14B is a flowchart illustrating a method 1450 for determining an action level. At step 1452, the computation node 912 determines if the value is equal to a predetermined target. If the value is equal to the predetermined target, the method proceeds to step 1454, and the computation node 912 does not modify the action level. If the value is not equal to the predetermined target, the method proceeds to step 1456, and the computation node 912 determines the action level based on the previous action level and a difference between the value and the predetermined target.

Referring to steps 912 to 914, the method can use the following equation:

$$
\begin{aligned}
&\text{while True:} \qquad\qquad\qquad\qquad\qquad\qquad\qquad\qquad\qquad\qquad (13)\\
&\quad \text{if ABSOLUTE}(VALUE - \theta) > \Delta:\\
&\qquad ACTION\_LEVEL[\text{k+1}] = ACTION\_LEVEL[\text{k}] + \gamma \times (VALUE - \theta)\\
&\quad \text{else:}\\
&\qquad ACTION\_LEVEL[\text{k+1}] = ACTION\_LEVEL[\text{k}]\\
&\quad \text{k} = \text{k} + 1\\
&\quad \text{sleep } T, \text{ where:}
\end{aligned}
$$

$\Delta$ = the pre-defined threshold for the deviation of the overload signal from the target value;

*VALUE* = the value for the current communication protocol statistic (e.g., a session rejection count);

$\gamma$ = a proportional gain constant that controls how rapidly the call gap will increase during congestion (e.g..001);

$\theta$ = the control signal target;

*T*= the periodic action calculation interval; and

*ACTION_LEVEL*[k] = the action level during the kth interval (e.g., an inter-call gap time of 50 ms).

Referring to step 1452, every *T* seconds a new *ACTION_LEVEL* is calculated based on *VALUE.* The computation node 912 determines whether the absolute value of *VALUE* - $\theta$ is greater than $\Delta$. Referring to step 1454, if ABSO-LUTE(*VALUE* - $\theta$) equals $\Delta$ (i.e., if *VALUE* is equal to $\theta$), the computation node 912 does not modify the action level. Referring to step 1456, if ABSOLUTE(*VALUE* - $\theta$) is greater than $\Delta$ (i.e., if *VALUE* is not equal to $\theta$), the computation node 912 determines the action level, *ACTION_LEVEL*[k+1] using a proportional algorithm based on the previous action level *ACTION_LEVEL*[k] (e.g., increasing the call gap proportional to the amount by which the control signal, *VALUE,* is different from the desired level of $\theta$). Advantageously, equation 13 does not result in oscillatory behavior because equation 13 uses control theory concepts (e.g., using a proportional algorithm) to provide faster convergence to the target point theta.

With respect to step 1308, the computation node 912 can distribute the one or more control parameters to the action location to mitigate the overload episode. For example, the server node 906 and/or the computation node 912 transmits the one or more control parameters to a server node between a source responsible for causing the overload episode and the downstream server. The server node performs the control action at the server node on data transmitted from the source to the downstream server by reducing a transmission rate (e.g., a call attempt rate of the one or more sources responsible for causing the overload episode to the downstream server) of data transmitted from the source to the downstream server, wherein the reduction is performed based on the one or more control parameters.

For example, given an overloaded destination (e.g., to the downstream server 904 or to a destination that is reachable via downstream server 904 such as a called destination phone number) that has been detected and identified (e.g., by the computation node 912), session gapping can be used to apply a limit on the minimum time between session requests (e.g., requests from clients 120) to the overloaded destination. Session gapping can be used to limit the incoming rate of session requests to the overloaded destination. For example, the computation node 912 can distribute control parameters to perform session gapping (the control action) to sessions received from clients 120 at a source 902 (e.g., an ingress node of the network). The control action controls the offered session request rate to the overloaded destination, and prevents sessions (that would be rejected) from entering the network and using network resources. The minimum time interval between calls for an overloaded destination can be calculated, for example, as the ACTION_LEVEL as described with reference to FIGS. 14A and 14B. This ACTION_LEVEL can vary as the degree of overload at the destination varies (e.g., based on unpredictable events such as mass-calling events).

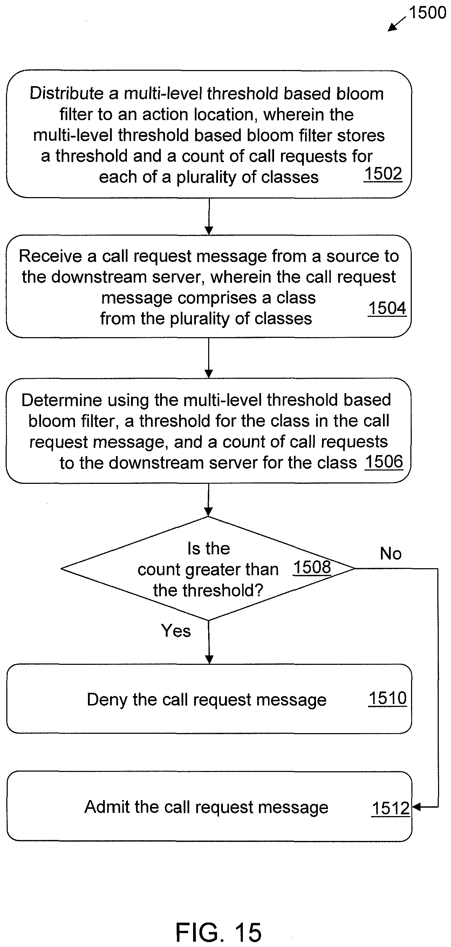

FIG. 15 is a flowchart illustrating a method 1500 for limiting focused server overload in a network, according to an illustrative embodiment of the invention. At step 1502, the computation node 912 distributes a multi-level threshold based bloom filter to an action location (e.g., server node 906). The multi-level threshold based bloom filter stores a plurality of thresholds, wherein each of the plurality of thresholds corresponds to a class from a plurality of classes associated with a call request for the communication protocol. The multi-level threshold based bloom filter also stores a count of call requests to the downstream server (e.g., downstream server 904) for each of the plurality of classes using one or more hash functions. At step 1504, the action location receives a call request message from a source to the downstream server, wherein the call request message comprises a class from the plurality of classes. At step 1506, the action location determines, using the multi-level threshold based bloom filter, (1) a threshold for the class in the call request message, and (2) a count of call requests to the downstream server for the class in the call request message based bloom filter using the one or more hash functions. At step 1508, the action location determines whether the count of call requests is greater than the threshold. If the count of call requests is greater than the threshold, the method proceeds to step 1510, and the action location denies the call request message. If the count of call requests is less than the threshold, the method proceeds to step 1512, and the action location admits the call request message.

Referring to step 1502, the multi-level threshold based bloom filter is used to handle M classes of call requests (e.g., low, medium, and high priority requests as described above). Each class has an associated priority that determines the likelihood that a transmission (e.g., from a client 120 to downstream server 904) is accepted under the current network conditions (e.g., whether there is an overload episode or not associated with the downstream server 904). The multi-level threshold based bloom filter maintains M thresholds, one per class of the *M* classes. For example, referring to steps 1504 - 1512 with a telecommunication network, when a call request from a client 120 to a destination enters a source 902 (e.g., an ingress node), the current level of congestion tracked by the multi-level threshold based bloom filter (the count of call requests to the destination) is compared against the threshold for the class corresponding to the call request. If the level of congestion exceeds the call request threshold then the call is denied, otherwise the call is admitted.

The above-described techniques can be implemented in digital and/or analog electronic circuitry, or in computer hardware, firmware, software, or in combinations of them. The implementation can be as a computer program product, i.e., a computer program tangibly embodied in a machine-readable storage device, for execution by, or to control the operation of, a data processing apparatus, e.g., a programmable processor, a computer, and/or multiple computers. A computer program can be written in any form of computer or programming language, including source code, compiled code, interpreted code and/or machine code, and the computer program can be deployed in any form, including as a stand-alone program or as a subroutine, element, or other unit suitable for use in a computing environment. A computer program can be deployed to be executed on one computer or on multiple computers at one or more sites.

Method steps can be performed by one or more processors executing a computer program to perform functions of the invention by operating on input data and/or generating output data. Method steps can also be performed by, and an apparatus can be implemented as, special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), or an ASIC (application-specific integrated circuit), or the like. Subroutines can refer to portions of the stored computer program and/or the processor, and/or the special circuitry that implement one or more functions.

Processors suitable for the execution of a computer program include, by way of example, both general and special purpose microprocessors, and any one or more processors of any kind of digital or analog computer. Generally, a processor receives instructions and data from a read-only memory or a random access memory or both. The essential elements of a computer are a processor for executing instructions and one or more memory devices for storing instructions and/or data. Memory devices, such as a cache, can be used to temporarily store data. Memory devices can also be used for long-term data storage. Generally, a computer also includes, or is operatively coupled to receive data from or transfer data to, or both, one or more mass storage devices for storing data, e.g., magnetic, magneto-optical disks, or optical disks. A computer can also be operatively coupled to a communications network in order to receive instructions and/or data from the network and/or to transfer instructions and/or data to the network. Computer-readable storage mediums suitable for embodying computer program instructions and data include all forms of volatile and non-volatile memory, including by way of example semiconductor memory devices, e.g., DRAM, SRAM, EPROM, EEPROM, and flash memory devices; magnetic disks, e.g., internal hard disks or removable disks; magneto-optical disks; and optical disks, e.g., CD, DVD, HD-DVD, and Blu-ray disks. The processor and the memory can be supplemented by and/or incorporated in special purpose logic circuitry.

To provide for interaction with a user, the above described techniques can be implemented on a computer in communication with a display device, e.g., a CRT (cathode ray tube), plasma, or LCD (liquid crystal display) monitor, for displaying information to the user and a keyboard and a pointing device, e.g., a mouse, a trackball, a touchpad, or a motion sensor, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, and/or tactile input.

The above described techniques can be implemented in a distributed computing system that includes a back-end component. The back-end component can, for example, be a data server, a middleware component, and/or an application server. The above described techniques can be implemented in a distributed computing system that includes a front-end component. The front-end component can, for example, be a client computer having a graphical user interface, a Web browser through which a user can interact with an example implementation, and/or other graphical user interfaces for a transmitting device. The above described techniques can be implemented in a distributed computing system that includes any combination of such back-end, middleware, or front-end components.

The components of the computing system can be interconnected by transmission medium 110, which can include any form or medium of digital or analog data communication (e.g., a communication network). Transmission medium 110 can include one or more packet-based networks and/or one or more circuit-based networks in any configuration. Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), Bluetooth, Wi-Fi, WiMAX, general packet radio service (GPRS) network, HiperLAN), and/or other packet-based networks. Circuit-based networks can include, for example, the public switched telephone network (PSTN), a legacy private branch exchange (PBX), a wireless network (e.g., RAN, code-division multiple access (CDMA) network, time division multiple access (TDMA) network, global system for mobile communications (GSM) network), and/or other circuit-based networks.

Information transfer over transmission medium 110 can be based on one or more communication protocols. Communication protocols can include, for example, Ethernet protocol, Internet Protocol (IP), Voice over IP (VOIP), a Peer-to-Peer (P2P) protocol, Hypertext Transfer Protocol (HTTP), Session Initiation Protocol (SIP), H.323, Media Gateway Control Protocol (MGCP), Signaling System #7 (SS7), a Global System for Mobile Communications (GSM) protocol, a Push-to-Talk (PTT) protocol, a PTT over Cellular (POC) protocol, and/or other communication protocols.

Devices of the computing system can include, for example, a computer, a computer with a browser device, a telephone, an IP phone, a mobile device (e.g., cellular phone, personal digital assistant (PDA) device, laptop computer, electronic mail device), and/or other communication devices. The browser device includes, for example, a computer (e.g., desktop computer, laptop computer) with a world wide web browser (e.g., Microsoft® Internet Explorer® available from Microsoft Corporation, Mozilla® Firefox available from Mozilla Corporation). Mobile computing device include, for example, a Blackberry®. IP phones include, for example, a Cisco® Unified IP Phone 7985G available from Cisco System, Inc, and/or a Cisco® Unified Wireless Phone 7920 available from Cisco System, Inc.

One skilled in the art will realize the invention may be embodied in other specific forms without departing from the essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

## Claims

1. A computerized method for limiting server overload via client control, the method comprising:

   transmitting a first set of a plurality of requests for services to a server at a first transmission rate during a first period of time;
   limiting the first transmission rate to be less than or equal to a first transmission limit rate during the first period of time;
   determining an overload value based on whether at least two or more requests of the first set of requests for service satisfy an overload criterion, based on a number of out of order responses to requests;
   storing the overload value in a computer memory module;
   determining a second transmission limit rate based on the overload value and the first transmission limit rate;
   transmitting a second set of a plurality requests for services to the server at a second transmission rate during a second period of time after the first period of time; and
   limiting the second transmission rate to be less than or equal to the second transmission limit rate during the second period of time.

2. The method of claim 1 further comprising determining whether the overload value is less than or greater than a target overload value.

3. The method of claim 2 wherein, if the overload value is greater than the target overload value, determining the second transmission limit rate comprises reducing the first transmission limit rate by an amount proportional to the difference between the overload value and the target overload value.

4. The method of claim 2 wherein, if the overload value is greater than the target overload value, determining the second transmission limit rate comprises reducing the first transmission limit rate by an amount proportional to the overload value.

5. The method of claim 2 wherein, if the overload value is less than the target overload value, determining the second transmission limit rate comprises increasing the first transmission limit rate by a rate step, wherein the rate step is based on the first transmission limit rate.

6. The method of claim 1 wherein a first layer entity determines the overload value and a second layer entity limits the first transmission rate, the first layer entity being different from the second layer entity.

7. The method of claim 1 wherein the overload criterion is further based on an explicit overload criterion that specifies a non-throttling client response.

8. The method of claim 1 wherein the overload criterion is an implicit overload criterion.

9. The method of claim 8 wherein the implicit overload criterion is based on one or more response messages from the server that are not associated with peer congestion, and one of:

   wherein the implicit overload criterion is satisfied if a fraction of the one or more responses is equal to or greater than a fractional threshold value; or
wherein the implicit overload criterion is based on a change in a fraction of the one or more responses that are equal to or greater than a fractional threshold value.

10. The method of claim 1 wherein determining the overload value comprises averaging and/or filtering the number of requests from the first set that satisfy the overload criterion, and wherein determining the overload value is further based on one or more prior overload values associated with one or more periods of time prior to the first period of time.

11. The method of claim 1 wherein the first period of time is separated from the second period of time by a blind interval period of time, and wherein the blind interval period of time is a fixed interval of time and/or is based on an average response time to one or more prior requests for services transmitted to the server.

12. The method of any preceding claim wherein transmitting the first set of requests comprises prioritizing transmission of the one or more requests based on request type.

13. The method of claim 8 wherein the overload value is further based on an explicit overload criterion, said explicit overload criterion being based on at least one of a received overload signal, a received overload notification, and a received service unavailable signal.

14. A system for limiting server overload via client control, the system comprising:

   a buffer configured to store a first set of a plurality of requests for service;
   a transmitter coupled to the buffer and configured to transmit the one or more requests for service to a server at a transmission rate less than or equal to a transmission limit rate during a first period of time; and
   a controller having:

      a computing means for determining an overload value based on whether at least two or more requests of the first set of requests for service satisfy an overload criterion, based on a number of out of order responses to requests;

   a computing means for adjusting the transmission limit rate based on the overload value and the transmission limit rate.

15. A computer program product, tangibly embodied in a machine-readable storage device, the computer program product including instructions being operable to cause a system to:

   transmit a first set of a plurality of requests for services to a server at a first transmission rate during a first period of time;
   limit the first transmission rate to be less than or equal to a first transmission limit rate during the first period of time;
   determine an overload value based on whether at least two or more requests of the first set of requests for service satisfy an overload criterion, based on a number of out of order responses to requests;
   store the overload value in a computer memory module;
   determine a second transmission limit rate based on the overload value and the first transmission limit rate;
   transmit a second set of a plurality of requests for services to the server at a second transmission rate during a second period of time after the first period of time; and
   limit the second transmission rate to be less than or equal to the second transmission limit rate during the second period of time.

**Patentansprüche**

1. Computergestütztes Verfahren zur Begrenzung von Serverüberlastung über Client-Steuerung, wobei das Verfahren Folgendes umfasst:

   Übertragen eines ersten Satzes von einer Vielzahl von Anfragen nach Diensten an einen Server mit einer ersten Übertragungsgeschwindigkeit während eines ersten Zeitraums;
   Begrenzen der ersten Übertragungsgeschwindigkeit auf weniger als eine erste oder gleich einer ersten Übertragungsgrenzgeschwindigkeit während des ersten Zeitraums;

Bestimmen eines Überlastwertes basierend auf, ob mindestens zwei oder mehrere Anfragen des ersten Satzes Anfragen nach Diensten ein Überlastkriterium erfüllen, basierend auf einer Anzahl von nicht korrekten Reaktionen auf Anfragen;

Speichern des Überlastwertes in einem Computerspeichermodul;

Bestimmen einer zweiten Übertragungsgrenzgeschwindigkeit basierend auf dem Überlastwert und der ersten Übertragungsgrenzgeschwindigkeit;

Übertragen eines zweiten Satzes von einer Vielzahl Anfragen nach Diensten an den Server mit einer zweiten Übertragungsgeschwindigkeit während eines zweiten Zeitraums nach dem ersten Zeitraum; und

Begrenzen der zweiten Übertragungsgeschwindigkeit auf weniger als die zweite oder gleich der zweiten Übertragungsgrenzgeschwindigkeit während des zweiten Zeitraums.

2. Verfahren nach Anspruch 1, ferner umfassend das Bestimmen, ob der Überlastwert geringer oder höher als ein Sollüberlastwert ist.

3. Verfahren nach Anspruch 2, wobei, wenn der Überlastwert höher als der Sollüberlastwert ist, das Bestimmen der zweiten Übertragungsgrenzgeschwindigkeit das Reduzieren der ersten Übertragungsgrenzgeschwindigkeit um einen Anteil umfasst, der proportional zur Differenz zwischen dem Überlastwert und dem Sollüberlastwert ist.

4. Verfahren nach Anspruch 2, wobei, wenn der Überlastwert höher als der Sollüberlastwert ist, das Bestimmen der zweiten Übertragungsgrenzgeschwindigkeit das Reduzieren der ersten Übertragungsgrenzgeschwindigkeit um einen Anteil umfasst, der proportional zum Überlastwert ist.

5. Verfahren nach Anspruch 2, wobei, wenn der Überlastwert geringer als der Sollüberlastwert ist, das Bestimmen der zweiten Übertragungsgrenzgeschwindigkeit das Erhöhen der ersten Übertragungsgrenzgeschwindigkeit um eine Geschwindigkeitsstufe umfasst, wobei die Geschwindigkeitsstufe auf der ersten Übertragungsgrenzgeschwindigkeit basiert.

6. Verfahren nach Anspruch 1 wobei eine erste Schichteinheit den Überlastwert bestimmt und eine zweite Schichteinheit die erste Übertragungsgeschwindigkeit begrenzt, wobei die erste Schichteinheit sich von der zweiten Schichteinheit unterscheidet.

7. Verfahren nach Anspruch 1, wobei das Überlastkriterium ferner auf einem expliziten Überlastkriterium basiert, der eine nicht-drosselnde Client-Reaktion spezifiziert.

8. Verfahren nach Anspruch 1, wobei das Überlastkriterium ein implizites Überlastkriterium ist.

9. Verfahren nach Anspruch 8, wobei das implizite Überlastkriterium auf einer oder mehreren Reaktionsmeldungen von dem Server, die nicht mit einer Peer-Überlastung einhergehend sind, und einer von folgenden basiert:

wobei das implizite Überlastkriterium erfüllt ist, wenn ein Bruchteil der einen oder mehreren Reaktionen gleich oder höher als ein Teilschwellenwert ist; oder

wobei das implizite Überlastkriterium auf einer Änderung in einen Bruchteil der einen oder mehreren Reaktionen basiert, die gleich oder höher als ein Teilschwellenwert sind.

10. Verfahren nach Anspruch 1, wobei das Bestimmen der Überlastwertes das Mitteln und/oder Filtern der Anzahl von Anfragen aus dem ersten Satz umfasst, die das Überlastkriterium erfüllen, und wobei das Bestimmen des Überlastwertes ferner auf einem oder mehreren vorherigen Überlastwerten basiert, die einem oder mehreren Zeiträumen vor dem ersten Zeitraum zugeordnet sind.

11. Verfahren nach Anspruch 1, wobei der erste Zeitraum von dem zweiten Zeitraum durch einen blinden Intervallzeitraum getrennt ist, und wobei der blinde Intervallzeitraum ein fester Zeitintervall ist und/oder auf einer durchschnittlichen Reaktionszeit auf eine oder mehrere vorherige Anfragen nach Diensten basiert, die an den Server übertragen werden.

12. Verfahren nach einem der vorhergehenden Ansprüche, wobei das Übertragen des ersten Satzes Anfragen das Priorisieren der Übertragung der einen oder mehreren Anfragen basierend auf Anfragetyp umfasst.

13. Verfahren nach Anspruch 8, wobei der Überlastwert ferner auf einem expliziten Überlastkrierium basiert,

wobei das explizite Überlastkriterium auf mindestens einem von einem empfangenen Überlastsignal, einer empfangenen Überlastmitteilung und einem empfangenen Dienst-nicht-verfügbar-Signal basiert.

14. System zur Begrenzung von Serverüberlastung über Client-Steuerung, wobei das System Folgendes umfasst:

einen Zwischenspeicher, der so konfiguriert ist, dass er einen ersten Satz von einer Vielzahl von Anfragen nach Diensten speichert;
einen Sender, der mit dem Zwischenspeicher verbunden ist und so konfiguriert ist, dass er die eine oder mehreren Anfragen nach Dienste an einen Server mit einer Übertragungsgeschwindigkeit überträgt, die geringer oder gleich einer Übertragungsgrenzgeschwindigkeit während eines ersten Zeitraums ist; und
eine Steuerung aufweisend:

eine Computereinrichtung zum Bestimmen eines Überlastwertes basierend auf, ob mindestens zwei oder mehrere Anfragen des ersten Satzes Anfragen nach Diensten ein Überlastkriterium erfüllen, basierend auf einer Anzahl von nicht korrekten Reaktionen auf Anfragen;
eine Computereinrichtung zum Einstellen der Übertragungsgrenzgeschwindigkeit basierend auf dem Überlastwert und der Übertragungsgrenzgeschwindigkeit.

15. Computerprogrammprodukt, greifbar in einer maschinenlesbaren Speichervorrichtung enthalten, wobei das Computerprogrammprodukt Anweisungen umfasst, die betreibar sind, um ein System zu Folgendem zu veranlassen:

Übertragen eines ersten Satzes von einer Vielzahl von Anfragen nach Diensten an einen Server mit einer ersten Übertragungsgeschwindigkeit während eines ersten Zeitraums;
Begrenzen der ersten Übertragungsgeschwindigkeit auf weniger als eine erste oder gleich einer ersten Übertragungsgrenzgeschwindigkeit während des ersten Zeitraums;
Bestimmen eines Überlastwertes basierend auf, ob mindestens zwei oder mehrere Anfragen des ersten Satzes Anfragen nach Diensten ein Überlastkriterium erfüllen, basierend auf einer Anzahl von nicht korrekten Reaktionen auf Anfragen;
Speichern des Überlastwertes in einem Computerspeichermodul;
Bestimmen einer zweiten Übertragungsgrenzgeschwindigkeit basierend auf dem Überlastwert und der ersten Übertragungsgrenzgeschwindigkeit;
Übertragen eines zweiten Satzes von einer Vielzahl von Anfragen nach Diensten an Server mit einer zweiten Übertragungsgeschwindigkeit während eines zweiten Zeitraums nach dem ersten Zeitraum; und
Begrenzen der zweiten Übertragungsgeschwindigkeit auf weniger als die zweite oder gleich der zweiten Übertragungsgrenzgeschwindigkeit während des zweiten Zeitraums.

## Revendications

1. Procédé informatisé permettant de limiter une surcharge de serveur par l'intermédiaire d'une commande de client, ledit procédé comprenant :

la transmission d'un premier ensemble d'une pluralité de demandes de services à un serveur à un premier débit de transmission durant une première période de temps ;
la limitation du premier débit de transmission de façon à ce qu'il soit inférieur ou égal à un premier débit limite de transmission durant la première période de temps ;
la détermination d'une valeur de surcharge sur la base qu'au moins deux demandes, ou plus, parmi le premier ensemble de demandes de service satisfassent, ou non, un critère de surcharge, basé sur un nombre de réponses hors séquence aux demandes ;
le stockage de la valeur de surcharge dans un module de mémoire informatique ;
la détermination d'un second débit limite de transmission sur la base de la valeur de surcharge et du premier débit limite de transmission ;
la transmission d'un second ensemble d'une pluralité de demandes pour des services au serveur à un second débit de transmission durant une seconde période de temps après la première période de temps ; et
la limitation du second débit de transmission de façon à ce qu'il soit inférieur ou égal au second débit limite de transmission durant la seconde période de temps.

2. Procédé selon la revendication 1, comprenant en outre la détermination pour savoir si la valeur de surcharge est inférieure ou supérieure à une valeur cible de surcharge.

3. Procédé selon la revendication 2, si la valeur de surcharge est supérieure à la valeur cible de surcharge, ladite détermination du second débit limite de transmission comprenant la réduction du premier débit limite de transmission par une quantité proportionnelle à la différence entre la valeur de surcharge et la valeur cible de surcharge.

4. Procédé selon la revendication 2, si la valeur de surcharge est supérieure à la valeur cible de surcharge, ladite détermination du second débit limite de transmission comprenant la réduction du premier débit limite de transmission par une quantité proportionnelle à la valeur de surcharge.

5. Procédé selon la revendication 2, si la valeur de surcharge est inférieure à la valeur cible de surcharge, ladite détermination du second débit limite de transmission comprenant l'augmentation du premier débit limite de transmission par un incrément de débit, ledit incrément de débit étant basé sur le premier débit limite de transmission.

6. Procédé selon la revendication 1, une première entité de couche déterminant la valeur de surcharge et une seconde entité de couche limitant le premier débit de transmission, ladite première entité de couche étant différente de la seconde entité de couche.

7. Procédé selon la revendication 1, ledit critère de surcharge étant en outre basé sur un critère de surcharge explicite qui spécifie une réponse client de non-étranglement.

8. Procédé selon la revendication 1, ledit critère de surcharge étant un critère de surcharge implicite.

9. Procédé selon la revendication 8, ledit critère de surcharge implicite étant basé sur un ou plusieurs messages de réponse provenant du serveur qui ne sont pas associés à la congestion de pairs et l'un de :

ledit critère de surcharge implicite étant satisfait si une fraction de la ou des réponses est supérieure ou égale à une valeur seuil fractionnelle ; ou ledit critère de surcharge implicite étant basé sur un changement dans une fraction de la ou des réponses qui sont supérieures ou égales à une valeur seuil fractionnelle.

10. Procédé selon la revendication 1, ladite détermination de la valeur de surcharge comprenant le calcul de la moyenne et/ou le filtrage du nombre de demandes provenant du premier ensemble qui satisfont au critère de surcharge, et ladite détermination de la valeur de surcharge étant en outre basée sur une ou plusieurs valeurs de surcharge précédentes associées à une ou plusieurs périodes de temps avant la première période de temps.

11. Procédé selon la revendication 1, ladite première période de temps étant séparée de la seconde période de temps par une période de temps mort, et ladite période de temps mort étant un intervalle de temps fixe et/ou étant basée sur un temps de réponse moyen à une ou plusieurs demandes de services précédentes transmises au serveur.

12. Procédé selon l'une quelconque des revendications précédentes, ladite transmission du premier ensemble de demandes comprenant l'attribution de priorité à la ou les demandes sur la base du type de demande.

13. Procédé selon la revendication 8, ladite valeur de surcharge étant en outre basée sur un critère de surcharge explicite, ledit critère de surcharge explicite étant basé sur au moins un parmi un signal de surcharge reçu, une notification de surcharge reçue et un signal indisponible de service reçu.

14. Système permettant de limiter la surcharge de serveur par l'intermédiaire d'une commande de client, ledit système comprenant :

une mémoire tampon conçue pour stocker un premier ensemble d'une pluralité de demandes de service ;
un transmetteur couplé à la mémoire tampon et conçu pour transmettre la ou les demandes de service à un serveur à un débit de transmission inférieur ou égal à un débit limite de transmission pendant une première période de temps ; et
un dispositif de commande possédant :

un moyen de calcul permettant de déterminer une valeur de surcharge sur la base qu'au moins deux demandes, ou plus, parmi le premier ensemble de demandes de service satisfassent un critère de surcharge, basé sur un nombre de réponses hors-séquence aux demandes ;

un moyen de calcul permettant de régler le débit limite de transmission sur la base de la valeur de surcharge et du débit limite de transmission.

15. Produit-programme d'ordinateur, incorporé concrètement dans un dispositif de stockage lisible par une machine, ledit produit-programme d'ordinateur comprenant des instructions utilisables pour amener un système à :

transmettre un premier ensemble d'une pluralité de demandes de services à un serveur à un premier débit de transmission durant une première période de temps ;
limiter le premier débit de transmission de façon à ce qu'il soit inférieur ou égal à un premier débit limite de transmission durant la première période de temps ;
la détermination d'une valeur de surcharge sur la base qu'au moins deux demandes, ou plus, du premier ensemble de demandes de service satisfassent, ou non, un critère de surcharge basé sur un nombre de réponses hors-séquence aux demandes ;
stocker la valeur de surcharge dans un module de mémoire d'ordinateur ;
déterminer un second débit limite de transmission sur la base de la valeur de surcharge et du premier débit limite de transmission ;
transmettre un second ensemble d'une pluralité de demandes de services au serveur à un second débit de transmission durant une seconde période de temps après la première période de temps ; et limiter le second débit de transmission de façon à ce qu'il soit inférieur ou égal au second débit limite de transmission durant la seconde période de temps.

Fig. 1

**200**

| | |
|---|---|
| Layer 7 – Application Layer | 270 |
| Layer 6 – Presentation Layer | 260 |
| Layer 5 – Session Layer | 250 |
| Layer 4 – Transport Layer | 240 |
| Layer 3 – Network Layer | 230 |
| Layer 2 – Data Link Layer | 220 |
| Layer 1 – Physical Layer | 210 |

120

115

290

280

# Fig. 2

Fig. 3

Fig. 4

**500**

```
        ┌─────────────────────────┐
  510 ──┤       DETERMINE          │◄──────────┐
        │    OVERLOAD VALUE        │           │
        └────────────┬────────────┘           │
                     │                         │
                     ▼                         │
        ┌─────────────────────────┐           │
        │       DETERMINE          │           │
  520 ──┤ TRANSMISSION LIMIT RATE  │           │
        │   BASED ON OVERLOAD      │           │
        │         VALUE            │           │
        └────────────┬────────────┘           │
                     │                         │
                     ▼                         │
        ┌─────────────────────────┐           │
        │ LIMITING TRANSMISSION OF │           │
        │ SERVICE REQUESTS BASED   │           │
  530 ──┤ ON TRANSMISSION LIMIT    │           │
        │         RATE             │           │
        └────────────┬────────────┘           │
                     │                         │
                     ▼                         │
        ┌ ─ ─ ─ ─ ─ ─ ─ ─ ─ ─ ─ ─ ┐           │
  540 ──  BLIND INTERVAL                       │
        │  TIME PERIOD            │────────────┘
        └ ─ ─ ─ ─ ─ ─ ─ ─ ─ ─ ─ ─ ┘
```

# Fig. 5

<u>600</u>

DETERMINE
WHETHER OVERLOAD
CONDITION EXISTS
610

Overload

No
Overload

STEP-DOWN
TRANSMISSION
LIMIT RATE

STEP-UP
TRANSMISSION
LIMIT RATE

520

620

630

Fig. 6

**700**

Fig. 7

**800**

Fig. 8

FIG. 9

EP 2 425 592 B1

FIG. 10

1100

Receive a feedback message from a downstream server, wherein the feedback message comprises a statistic of a communication protocol 1102

Determine which of one or more counters, from an array of counters, are associated with the downstream server using one or more hash functions based on information included 1104 in the feedback message

Increment the one or more counters in response to the feedback message including the statistic 1106

Determine using the one or more hash functions, a value of the number stored 1108 in the one or more counters

Overload episode? 1110

No

Yes

Identify one or more sources that initiated a transmission to the downstream server that caused the downstream server to transmit a feedback message are responsible 1112 for causing the overload episode

Determine one or more control parameters for performing a control action based on the value 1114

FIG. 11

FIG. 12A

FIG. 12B

FIG. 12C

1300

Determine an action location that
specifies where to take the control action 1302

Determine an action filter that defines one
or more sources to which to apply
the control action at the action location 1304

Determine an action level for the control action
1306

Distribute the one or more control
parameters to the action location 1308

FIG. 13

1400

Is the
value > a predetermined 1402
threshold?                    No

Yes

Determine the action level to be a decrease 1404
from a previous action level using a decrease factor

Determine the action level to be an increase from
the previous action level using an increase step
1406

FIG. 14A

1450

Is the 1452
value equal to a predetermined                No
target?

Yes

Leave the action level unmodified    1454

Determine the action level based on a
previous action level and a difference between
the value and the predetermined target  1456

FIG. 14B

1500

Distribute a multi-level threshold based bloom filter to an action location, wherein the multi-level threshold based bloom filter stores a threshold and a count of call requests for each of a plurality of classes    1502

Receive a call request message from a source to the downstream server, wherein the call request message comprises a class from the plurality of classes    1504

Determine using the multi-level threshold based bloom filter, a threshold for the class in the call request message, and a count of call requests to the downstream server for the class 1506

Is the count greater than    1508 the threshold?

No

Yes

Deny the call request message    1510

Admit the call request message    1512

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6377989 B